# EUROPÄISCHE PATENTSCHRIFT

(11) **EP 3 365 594 B1**
(45) Veröffentlichungstag und Bekanntmachung des Hinweises auf die Patenterteilung: **09.09.2020**
(21) Anmeldenummer: 16791302.9
(22) Anmeldetag: 24.10.2016
(51) Int. Cl.: F21S 41/143, F21S 41/151, F21S 41/20

(54) **MIKROPROJEKTIONS-LICHTMODUL FÜR EINEN KRAFTFAHRZEUGSCHEINWERFER ZUR ERZEUGUNG VON ABBILDUNGSFEHLERFREIEN LICHTVERTEILUNGEN**
MICRO-PROJECTION LIGHT MODULE FOR A MOTOR VEHICLE HEADLIGHT, FOR ACHIEVING APLANATIC LIGHT DISTRUBTION
MODULE LUMINEUX À MICROPROJECTION POUR UN PROJECTEUR DE VÉHICULE À MOTEUR SERVANT À PRODUIRE DES RÉPARTITIONS DE LUMIÈRE SANS ABERRATION

(30) Priorität: 23.10.2015 AT 509052015
(43) Veröffentlichungstag der Anmeldung: 29.08.2018
(73) Patentinhaber: ZKW Group GmbH, 3250 Wieselburg (AT)
(72) Erfinder: MOSER, Andreas, 4320 Perg (AT); MANDL, Bernhard, 3200 Ober-Grafendorf (AT); JACKL, Christian, 3250 Wieselburg (AT)
(74) Vertreter: Patentanwaltskanzlei Matschnig & Forsthuber OG
(86) Internationale Anmeldenummer: PCT/AT2016/060088
(87) Internationale Veröffentlichungsnummer: WO 2017/066818

(56) Entgegenhaltungen:
- WO-A1-2011/132108
- WO-A1-2014/164792
- AT-B1- 514 967
- DE-A1- 3 241 713
- JP-A- H02 103 801

## Beschreibung

Die Erfindung betrifft ein Mikroprojektions-Lichtmodul für einen Kraftfahrzeugscheinwerfer, umfassend zumindest eine Lichtquelle sowie zumindest eine Projektionseinrichtung, welche das von der zumindest einen Lichtquelle austretende Licht in einen Bereich vor dem Kraftfahrzeug in Form von zumindest einer Lichtverteilung abbildet, wobei die Projektionseinrichtung umfasst eine Eintrittsoptik, welche eine, zwei oder mehr Mikro-Eintrittsoptiken aufweist, welche vorzugsweise in einem Array angeordnet sind, eine Austrittsoptik, welche eine, zwei oder mehr Mikro-Austrittsoptiken aufweist, welche vorzugsweise in einem Array angeordnet sind, wobei jeder Mikro-Eintrittsoptik genau eine Mikro-Austrittsoptik zugeordnet ist, wobei die Mikro-Eintrittsoptiken derart ausgebildet und/ oder die Mikro-Eintrittsoptiken und die Mikro-Austrittsoptiken derart zueinander angeordnet sind, dass im Wesentlichen das gesamte aus einer Mikro-Eintrittsoptik austretende Licht genau nur in die zugeordnete Mikro-Austrittsoptik eintritt, und wobei das von den Mikro-Eintrittsoptiken vorgeformte Licht von den Mikro-Austrittsoptiken in einen Bereich vor dem Kraftfahrzeug als zumindest eine Lichtverteilung abgebildet wird, wobei zwischen der Eintrittsoptik und der Austrittsoptik eine erste Blendenvorrichtung angeordnet ist.

Des Weiteren betrifft die Erfindung eine Beleuchtungsvorrichtung mit zumindest einem solchen Mikroprojektions-Lichtmodul.

Darüber hinaus betrifft die Erfindung einen Fahrzeugscheinwerfer mit zumindest einer solchen Beleuchtungsvorrichtung.

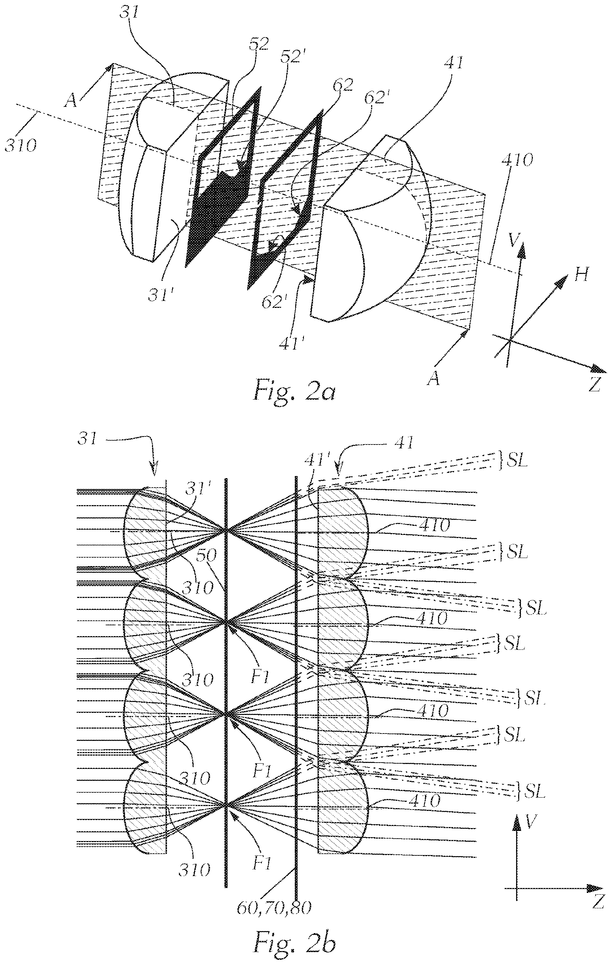

Mikroprojektions-Lichtmodule der oben genannten Art sind dem Stand der Technik bekannt. In AT 514967 B1 der Anmelderin ist ein Mikroprojektions-Lichtmodul für einen Fahrzeugscheinwerfer mit einer Blendenvorrichtung zur Erzeugung einer Lichtverteilung eines vorgegebenen Typs offenbart. Dabei kommt es zu einem "Übersprechen" (siehe Fig. 2b der vorliegenden Anmeldung) im Projektionssystem und zu Abbildungsfehlern (aufgrund z.B. nichtparaxialer Strahlen, oder chromatischer Aberration (Farblängs- und/oder Farbquerfehler)) durch das Projektionssystem. Diese beiden Fehlerquellen führen dazu, dass die entstehende Lichtverteilung, welche als Lichtbild vor das Mikroprojektions-Lichtmodul projiziert wird, nicht abbildungsfehlerfrei ist, wobei unter einer "abbildungsfehlerfreien Lichtverteilung" im Zusammenhang mit der vorliegenden Erfindung eine Lichtverteilung ohne Abbildungsfehler der in dieser Anmeldung genannten Art und ohne Streulicht aufgrund des Übersprechens verstanden wird.

Es ist also eine Aufgabe der Erfindung, ein eingangs erwähntes Mikroprojektions-Lichtmodul für einen Kraftfahrzeugscheinwerfer dahin gehend weiter zu bilden, dass abbildungsfehlerfreie Lichtverteilungen eines bestimmten Typs, beispielsweise mit einer Hell-Dunkel-Grenze, erzeugt werden können.

Dabei wird unter "einem bestimmten Typ" der Lichtverteilung eine gemäß einschlägigen Normen erzeugte Lichtverteilung verstanden, beispielsweise eine Lichtverteilung nach Normen der UN/ECE Regelungen in den Staaten der Europäischen Union, insbesondere Regelungen 123 und 48, oder einschlägigen Normen in den anderen Weltregionen.

Diese Aufgabe wird mit einem eingangs erwähnten Mikroprojektions-Lichtmodul dadurch gelöst, dass erfindungsgemäß zwischen der Eintrittsoptik und der Austrittsoptik zumindest eine zweite Blendenvorrichtung angeordnet ist.

Es kann dabei vorgesehen sein, dass die zweite Blendenvorrichtung zwischen der ersten Blendenvorrichtung und der Austrittsoptik angeordnet ist.

Insbesondere kann es vorteilhaft sein, wenn eine Mikro-Eintrittsoptik und eine der einen Mikro-Eintrittsoptik zugeordnete Mikro-Austrittsoptik ein Mikro-Optiksystem bilden, welches Mikro-Optiksystem zumindest einen Mikro-Optik-Brennpunkt aufweist.

Dabei kann es vorgesehen sein, dass jede Mikro-Eintrittsoptik das durch sie durchtretende Licht in den zumindest einen Mikro-Optik-Brennpunkt fokussiert.

Darüber hinaus kann es vorteilhaft sein, wenn ein Mikro-Optik-Brennpunkt jeder Mikro-Eintrittsoptik in Lichtaustrittsrichtung vor der zugeordneten Mikro-Austrittsoptik liegt.

Weiters kann vorgesehen sein, dass die Mikro-Eintrittsoptiken das durch sie durchtretende Licht in vertikaler Richtung jeweils auf den vor der Mikro-Austrittsoptik liegenden Mikro-Optik-Brennpunkt fokussieren.

Bei einer bevorzugten Ausführungsform kann es vorgesehen sein, dass die Mikro-Austrittsoptiken einen jeweils mit dem Mikro-Optik-Brennpunkt der zugeordneten Mikro-Eintrittsoptik zusammenfallenden Brennpunkt aufweisen.

Licht wird also in den Brennpunkt des Mikro-Optiksystems fokussiert und anschließend nach dem Durchtritt durch die Mikro-Austrittsoptik entsprechend in der vertikalen Richtung kollimiert und in einen Bereich vor dem Fahrzeug projiziert.

Außerdem kann es mit Vorteil vorgesehen sein, dass jedes Mikro-Optiksystem das durch sie durchtretende Licht in horizontaler Richtung aufweitet.

Dabei fokussiert jedes Mikro-Optiksystem das durchtretende Licht in vertikaler Richtung auf einen Mikro-Optik-Brennpunkt, welcher vorzugsweise hinter der Mikro-Eintrittsoptik und vor der Mikro-Austrittsoptik liegt. Dieses Licht tritt weiters durch die Mikro-Austrittsoptik durch und wird nun in horizontaler Richtung in einen Brennpunkt fokussiert, welcher vorzugsweise hinter der Mikro-Austrittsoptik liegt.

Die Begriffe beziehen sich "vor" und "hinter" auf die Hauptausbreitungsrichtung des vom Mikroprojektions-Lichtmodul abgestrahlten Lichts.

Es kann zweckmäßig sein wenn die Mikro-Eintrittsoptiken als Sammeloptiken ausgebildet sind.

Des Weiteren kann vorgesehen sein, dass die Mikro-Eintrittsoptiken als Freiform-Optiken ausgebildet sind.

Zweckdienlich ist, wenn die Mikro-Austrittsoptiken als Projektionsoptiken ausgebildet sind.

Darüber hinaus kann vorgesehen sein, dass die Mikro-Austrittsoptiken als sphärische oder asphärische Linsen ausgebildet sind.

Außerdem kann es vorteilhaft sein, wenn die Mikro-Austrittsoptiken als Freiform-Linsen ausgebildet sind.

Bei einer konkreten, besonders bevorzugten Ausführungsform der Erfindung ist vorgesehen, die einander zugewandten Grenzflächen von einander zugeordneten Mikro-Eintrittsoptiken und Mikro-Austrittsoptiken kongruent zueinander ausgebildet und vorzugsweise auch kongruent zueinander angeordnet sind.

"Kongruent ausgebildet" bedeutet dabei nichts anderes, als dass die Grenzflächen von einander zugeordneten Mikro-Optiken dieselbe Form der Grundfläche aufweisen, mit im Prinzip beliebiger räumlicher Anordnung. "Kongruent" angeordnet bedeutet, dass diese Grundflächen zusätzlich auch noch so angeordnet sind, dass sie bei einem Verschieben normal zu einer der Grundflächen deckungsgleich ineinander übergehen würden.

Von besonderem Vorteil ist es, die optischen Achsen von einander zugeordneten Mikro-Eintrittsoptiken und Mikro-Austrittsoptiken parallel zueinander verlaufen, vorzugsweise zusammenfallen. Auf diese Weise wird das Lichtbild jedes einzelnen Mikro-Optiksystems besonders exakt hinsichtlich seiner Lage abgebildet, sodass sich bei Überlagerung der einzelnen Lichtbilder zu einer gewünschten Gesamtlichtverteilung, z.B. eine Abblendlichtverteilung, diese in optischer Hinsicht optimal erzeugen lässt.

Die Grundflächen der Optiken können dabei z.B. hexagonal, rechteckig oder vorzugsweise quadratisch ausgebildet sein.

Hinsichtlich der Qualität des Lichtbildes kann es vorteilhaft sein, wenn die erste Blendenvorrichtung in einer Ebene liegt, welche von den Mikro-Optik-Brennpunkten aufgespannt ist.

Dabei kann vorgesehen sein, dass die erste Blendenvorrichtung für zumindest ein Paar von einander zugeordneten Mikro-Eintritts- und Mikro-Austrittsoptiken, vorzugsweise für mehrere Paare und insbesondere für alle Paare eine Blende mit jeweils zumindest einer, beispielsweise genau einer optisch wirksamen Blendenkante aufweist.

Hinsichtlich des Produktionsaufwandes kann es zweckmäßig sein, wenn alle Blenden der ersten Blendenvorrichtung identische Blendenkanten aufweisen.

Hinsichtlich der Lichtbildgestaltung kann es vorgesehen sein, dass zumindest zwei Blenden der ersten Blendenvorrichtung unterschiedlich gestaltete Blendenkanten aufweisen.

Um die Abbildungsfehler gezielt zu korrigieren, kann es von Vorteil sein, wenn die zweite Blendenvorrichtung für zumindest ein Paar von einander zugeordneten Mikro-Eintritts- und Mikro-Austrittsoptiken, vorzugsweise für mehrere Paare und insbesondere für alle Paare eine Blende mit jeweils zumindest einer, beispielsweise genau einer optisch wirksamen Blendenkante aufweist.

Bei einer konkreten Ausführungsform kann vorgesehen sein, dass alle Blenden der zweiten Blendenvorrichtung identische Blendenkanten aufweisen.

Darüber hinaus ist es besonders vorteilhaft, wenn zumindest zwei Blenden der zweiten Blendenvorrichtung unterschiedlich gestaltete Blendenkanten aufweisen.

Hinsichtlich der Aberrationen, die aus der Bildfeldwölbung und Verzeichnung der Projektionseinrichtung herrühren, kann es vorteilhaft sein, wenn zumindest eine, vorzugsweise zwei, der optisch wirksamen Blendenkanten einen giebelförmigen Verlauf aufweist.

Dabei kann es vorteilhaft sein, dass der giebelförmige Verlauf der zumindest einen der optisch wirksamen Blendenkanten nach außen in Bezug auf Blendenöffnung gerichtet ist. Bei einem geradlinigen Verlauf von Giebelkanten ist die Blendenöffnung mathematisch gesehen als eine zweidimensionale im Wesentlichen konvexe Menge ausgebildet. Der giebelförmige Verlauf kann beispielsweise Form eines Dreiecks oder eines Schweifgiebels aufweisen oder gerundet oder trapezförmig sein.

Darüber hinaus kann es vorteilhaft sein, wenn bezüglich der vertikalen Richtung eine untere und/ oder eine obere optisch wirksame Blendenkante der Blende ein, zwei oder mehr gekrümmte und/ oder geradlinige Segmente aufweisen/ aufweist, insbesondere dreieck- oder trapez- oder schweif- oder kreisförmig ausgebildet sind/ist.

Es muss an dieser Stelle angemerkt sein, dass es im Sinne der Erfindung sein kann, wenn die untere und/ oder obere optisch wirksame Blendenkante von der optischen Achse nach außen der Blende hin giebelförmig ausgebildet sind/ist. Dabei kann es sich um eine steil- oder flach- oder normalgipflige Form des Gipfels handeln.

Hinsichtlich der Reduktion des Übersprechens und Aberrationen kann es vorteilhaft sein, wenn die zweite Blendenvorrichtung hinsichtlich der ersten Blendenvorrichtung derart angeordnet ist, dass die Blenden der zweiten Blendenvorrichtung bezüglich der Blenden der ersten Blendenvorrichtung vertikal, d.h. parallel zu einer vertikalen Achse, versetzt sind.

Hinsichtlich der Anpassung der Apertur von Mikro-Optiksystemen ist es von Vorteil, wenn die erste Blendenvorrichtung und die zweite Blendenvorrichtung beabstandet sind. Dabei trägt die zweite Blendenvorrichtung Funktion einer Aperturblende, mit welcher Aperturblende die Abbildungsfehler korrigiert werden können.

Grundsätzlich weist eine Projektionseinrichtung, wie oben beschrieben, eine Mehrzahl an Mikro-Optiksystemen, also Paaren bestehend aus jeweils einer Mikro-Eintrittsoptik und einer Mikro-Austrittsoptik, auf. In der einfachsten Ausgestaltung ohne Blendenvorrichtungen erzeugen alle Mikro-Optiksysteme dieselbe Lichtverteilung, welche (Teil-)Lichtverteilungen in Summe z.B. eine Fernlichtverteilung bilden. Hier wird dabei der Einfachheit halber davon ausgegangen, dass mit genau einem Lichtmodul eine vollständige Lichtverteilung erzeugt wird. In der Praxis kann aber auch vorgesehen sein, dass zur Erzeugung der Gesamtlichtverteilung zwei oder auch mehrere erfindungsgemäße Lichtmodule verwendet werden. Dies kann z.B. dann sinnvoll sein, wenn etwa aus Platzgründen eine Aufteilung der Bauteile auf unterschiedliche Positionen im Scheinwerfer notwendig ist.

Zur Erzeugung einer abgeblendeten Lichtverteilung, etwa einer Abblendlichtverteilung, welche in bekannter Weise eine Hell-Dunkel-Grenze aufweist, kann nun vorgesehen sein, dass jedem Mikro-Optiksystem mehr oder weniger identische Blenden im Strahlengang zugeordnet sind, sodass alle Mikro-Optiksysteme eine Lichtverteilung mit einer Hell-Dunkel-Grenze erzeugen. Die Überlagerung aller Lichtverteilungen ergibt dann als Gesamtlichtverteilung die abgeblendete Lichtverteilung.

Die Blenden können dabei in diesem Fall wie auch in allen anderen als einzelne Blenden ausgeführt sein (z.B. in Form einer lichtundurchlässigen Schicht, beispielsweise einer aufgedampften Schicht, etc.), welche die erste Blendenvorrichtung "bilden", es kann sich aber auch um einen Blendenvorrichtungs-Bauteil handeln, etwa eine ebene Folie etc., in welchem Blendenvorrichtungs-Bauteil entsprechende Öffnungen zum Durchtritt von Licht vorgesehen sind. Dabei kommt es zu oben genannten und unten noch eingehender erläuterten Abbildungsfehlern, welche nun durch das Einfügen der zweiten Blendenvorrichtung beseitigt werden können.

Darüber hinaus kann es auch vorgesehen sein, dass unterschiedliche Blenden vorgesehen sind, d.h., dass einem oder mehreren Mikro-Optiksystemen eine erste Blende der ersten Blendenvorrichtung und eine zweite Blende der zweiten Blendenvorrichtung zugeordnet ist, einem oder mehreren anderen Mikro-Optiksystemen zumindest jeweils eine andere, mit der ersten Blende identische oder von der ersten Blende verschiedene, Blende der ersten Blendenvorrichtung (oder keine Blende) und eine andere, mit der zweiten Blende identische oder von der zweiten Blende verschiedene, Blende der zweiten Blendenvorrichtung (oder keine Blende), usw., sodass unterschiedliche Mikro-Optiksysteme unterschiedliche abbildungsfehlerfreie Lichtverteilungen bilden. Durch selektives Aktivieren einzelner Mikro-Optiksysteme, wozu es allerdings notwendig ist, dass diesen eigene, zumindest gruppenweise separat ansteuerbare Lichtquellen zugeordnet sind, können auf diese Weise einzelne, unterschiedliche Lichtverteilungen erzeugt werden, die auch in Überlagerung betrieben werden können.

Weiters kann es vorgesehen sein, dass die erste Blendenvorrichtung und die zweite Blendenvorrichtung identisch ausgebildet sind.

Dabei kann es zweckmäßig sein, wenn die zweite Blendenvorrichtung hinsichtlich der ersten Blendenvorrichtung bezüglich einer horizontalen Ebene gespiegelt angeordnet ist.

Es kann aber auch vorgesehen sein, dass die erste Blendenvorrichtung mit der zweiten Blendenvorrichtung einstückig ausgebildet ist.

Es kann von Vorteil sein, wenn die Projektionseinrichtung bestehend aus Eintrittsoptik und Austrittsoptik, und aus der ersten Blendeneinrichtung und aus der zweiten Blendenvorrichtung, einteilig ausgebildet ist.

Darüber hinaus kann vorgesehen sein, dass die Projektionseinrichtung bestehend aus Eintrittsoptik und Austrittsoptik aus zwei voneinander getrennten Bauteilen gebildet ist.

Außerdem kann vorgesehen sein, dass die erste Blendenvorrichtung auf der der Austrittsoptik zugewandten Grenzfläche der Eintrittsoptik angeordnet ist.

Des Weiteren ist es vorteilhaft, wenn die erste Blendenvorrichtung als von der Eintrittsoptik, der Austrittsoptik und von der zweiten Blendenvorrichtung getrennt ausgebildetes Bauteil ausgebildet ist.

Bei einer vorteilhaften Ausführungsform ist vorgesehen, dass die zweite Blendenvorrichtung auf der der Eintrittsoptik zugewandten Grenzfläche der Austrittsoptik angeordnet ist.

Dabei kann vorgesehen sein, dass die zweite Blendenvorrichtung als von der Eintrittsoptik, der Austrittsoptik und der ersten Blendenvorrichtung getrennt ausgebildetes Bauteil ausgebildet ist.

Weiters kann vorgesehen sein, dass die zumindest eine Lichtquelle zumindest eine Halbleiterlichtquelle, z.B. zumindest eine Leuchtdiode und/oder zumindest eine Laserdiode umfasst.

Es ist zweckmäßig, wenn zwischen der zumindest einen Lichtquelle und der zumindest einen Projektionseinrichtung zumindest eine Vorsatzoptikeinrichtung angeordnet ist, in welche zumindest eine Vorsatzoptikeinrichtung die zumindest eine Lichtquelle das von ihr emittierte Licht einstrahlt, und welche Vorsatzoptikeinrichtung derart ausgebildet ist, dass das aus ihr austretende Licht im Wesentlichen parallel gerichtet ist.

Dabei kann es zweckmäßig sein, wenn die Vorsatzoptikeinrichtung als Kollimator ausgebildet ist.

Von besonderem Vorteil ist es, wenn die Lichtquelle zumindest eine halbleiterbasierte Lichtquelle aufweist, welche zumindest eine halbleiterbasierte Lichtquelle eine, zwei oder mehr LEDs und/ oder Laserdioden umfasst, wobei die eine, zwei oder mehr LEDs und/ oder Laserdioden der zumindest einen halbleiterbasierten Lichtquelle unabhängig voneinander ansteuerbar sind.

Unter "ansteuerbar" ist hier in erster Linie das Ein- und Ausschalten zu verstehen. Zusätzlich kann darunter auch das Dimmen der einen, zwei oder mehr LEDs und/ oder Laserdioden der zumindest einen halbleiterbasierten Lichtquelle verstanden werden.

Dabei kann es vorteilhaft sein, wenn bei zwei oder mehr Lichtquellen die Lichtquellen unabhängig voneinander ansteuerbar sind.

Unter "unabhängig voneinander" ist dabei zu verstehen, dass tatsächlich alle Lichtquellen unabhängig voneinander angesteuert werden können, oder dass die Lichtquellen gruppenweise unabhängig voneinander angesteuert werden können.

Bei einer Ausführungsform der Erfindung ist vorgesehen, dass jedem Mikro-Optiksystem bestehend aus einer Mikro-Eintrittsoptik und einer Mikro-Austrittsoptik genau eine Lichtquelle, welche vorzugsweise genau eine Leuchtdiode oder genau eine Laserdiode umfasst, zugeordnet ist.

Es kann außerdem vorgesehen sein, dass zwei oder mehr Lichtquellen-Gruppen vorgesehen sind, wobei jede Lichtquellen-Gruppe zumindest eine Lichtquelle umfasst, und wobei die Lichtquellen einer Lichtquellen-Gruppe Licht derselben Farbe emittieren, und wobei die Lichtquellen unterschiedlicher Lichtquellen-Gruppen Licht unterschiedlicher Farbe emittieren, und wobei jede Lichtquellen-Gruppe einen eigens dieser Lichtquellen-Gruppe zugeordneten Bereich der zumindest einen Projektionseinrichtung beleuchten, und wobei die unterschiedlichen Bereiche identisch ausgebildet bzw. zur Erzeugung identischer Lichtverteilungen ausgebildet sind.

Dabei ist zu beachten, dass die Position der ersten Blendenvorrichtung und /oder der zweiten Blendenvorrichtung und/oder die Form der Eintrittsoptiken (beispielsweise die Dicke der jeweiligen Eintrittsoptik und/oder die Krümmungen der die Eintrittsoptiken bildenden Mikro-Eintrittsoptiken) an die jeweilige Lichtquellen-Gruppe angepasst werden sollte. Wie oben erwähnt, ist die erste Blendenvorrichtung vorzugsweise in der Brennfläche der Projektionseinrichtung angeordnet. Durch die Dispersion (Abhängigkeit des Brechungsindex von der Wellenlänge des Lichts) des Materials, aus dem die Eintritts- und die Austrittsoptiken bestehen, sind die Positionen der Brennpunkte der Mikro-Optiksysteme für jede Farbe (grün, rot oder blau) verschieden. Infolgedessen fallen die Brennflächen der mit z.B. rotem, grünen oder blauen Licht bestrahlten Teile einer und derselben Projektionseinrichtung oder der bestrahlten Projektionseinrichtungen nicht notgedrungen zusammen. Dies kann wiederum zu Farbfehlern (Farblängs- und/ oder Farbquerfehler) im Lichtbild (in der abgestrahlten Lichtverteilung) führen, wenn die Position der ersten Blendenvorrichtung und eventuell auch der zweiten Blendenvorrichtung an die Farbe des von den Lichtquellen abgestrahlten Lichts angepasst wird.

Zweckmäßig dabei ist es, wenn drei Lichtquellen-Gruppen vorgesehen sind, wobei vorzugsweise eine Lichtquellen-Gruppen rotes Licht, eine Lichtquellen-Gruppe grünes Licht und eine Lichtquellen-Gruppe blaues Licht emittiert.

Die eingangs gestellten Aufgaben werden weiters mit einer Beleuchtungsvorrichtung für einen Fahrzeugscheinwerfer gelöst, welche zumindest ein, vorzugsweise zwei oder mehr Mikroprojektions-Lichtmodule wie oben beschrieben umfasst.

Dabei kann vorteilhaft sein, wenn zwei oder mehr Gruppen von Mikroprojektions-Lichtmodulen vorgesehen sind, und wobei jede Gruppe ein, zwei oder mehrere Mikroprojektions-Lichtmodule umfasst, wobei Mikroprojektions-Lichtmodule einer Gruppe dieselbe Lichtverteilung erzeugen, und wobei Mikroprojektions-Lichtmodule aus unterschiedlichen Gruppen unterschiedliche Lichtverteilungen erzeugen.

Ein weiterer Vorteil entsteht, wenn die Lichtquellen jeder Gruppe von Mikroprojektions-Lichtmodulen unabhängig von den Lichtquellen der anderen Gruppen ansteuerbar sind.

Es kann auch vorgesehen sein, dass die Projektionseinrichtungen von Mikroprojektions-Lichtmodulen einer Gruppe ein gemeinsames Bauteil bilden.

Des Weiteren kann vorgesehen sein, dass die Projektionseinrichtungen aller Mikroprojektions-Lichtmodule ein gemeinsames Bauteil bilden.

Hinsichtlich der Fertigung kann es besonders günstig sein, wenn das oder die gemeinsamen Bauteile in Form einer Folie ausgebildet ist/sind.

Es kann zweckdienlich sein, wenn zwei oder mehr Gruppen zur Erzeugung unterschiedlicher Lichtverteilung vorgesehen sind, wobei jede Gruppen eine unterschiedliche Lichtverteilung bildet, die aus einer der folgenden Lichtverteilungen gewählt ist:
*) Abbiegelicht-Lichtverteilung;
*) Stadtlicht-Lichtverteilung;
*) Landstraßenlicht-Lichtverteilung;
*) Autobahnlicht-Lichtverteilung;
*) Lichtverteilung für Zusatzlicht für Autobahnlicht;
*) Kurvenlicht-Lichtverteilung;
*) Abblendlicht-Lichtverteilung;
*) Abblendlicht-Vorfeld-Lichtverteilung;
*) Lichtverteilung für asymmetrisches Abblendlicht im Fernfeld;
*) Lichtverteilung für asymmetrisches Abblendlicht im Fernfeld im Kurvenlichtmodus;
*) Fernlicht-Lichtverteilung;
*) Blendfreies Fernlicht-Lichtverteilung.

Nicht ausschließlich nur, aber insbesondere bei der Verwendung von Laser-Lichtquellen hat es sich auch noch als günstig herausgestellt, wenn die Beleuchtungsvorrichtung zwei oder mehr Lichtmodule umfasst, wobei jedes Lichtmodul zumindest eine Lichtquellen-Gruppe aufweist, wobei jede Lichtquellen-Gruppe zumindest eine Lichtquelle umfasst, und wobei Lichtquellen einer Lichtquellen-Gruppe Licht derselben Farbe emittieren, und wobei zumindest zwei Lichtquellen-Gruppen vorgesehen sind, welche Licht unterschiedlicher Farbe emittieren, und wobei jede Lichtquellen-Gruppe einen eigens dieser Lichtquellen-Gruppen zugeordneten Bereich der zumindest einen Projektionseinrichtung ihres Lichtmoduls beleuchten, und wobei die unterschiedlichen Bereiche identisch ausgebildet bzw. zur Erzeugung identischer Lichtverteilungen ausgebildet sind.

Eine besonders vorteilhafte Ausführungsform ergibt sich, wenn die Beleuchtungsvorrichtung zwei oder mehr Mikroprojektions-Lichtmodule umfasst, wobei jedes Mikroprojektions-Lichtmodul zumindest eine Lichtquellen-Gruppe aufweist, wobei jede Lichtquellen-Gruppe zumindest eine Lichtquelle umfasst, und wobei Lichtquellen einer Lichtquellen-Gruppe Licht derselben Farbe emittieren, und wobei zumindest zwei Lichtquellen-Gruppen vorgesehen sind, welche Licht unterschiedlicher Farbe emittieren, und wobei jede Lichtquellen-Gruppe einen eigens dieser Lichtquellen-Gruppen zugeordneten Bereich der zumindest einen Projektionseinrichtung ihres Mikroprojektions-Lichtmoduls beleuchten, und wobei die unterschiedlichen Bereiche identisch ausgebildet bzw. zur Erzeugung identischer Lichtverteilungen ausgebildet sind.

Besonders günstig hinsichtlich der Erzeugung von weißem Licht ist es, wenn drei Gruppen von Lichtquellen-Gruppen vorgesehen sind, wobei vorzugsweise eine Gruppe an Lichtquellen-Gruppen rotes Licht, eine Gruppe an Lichtquellen-Gruppen grünes Licht und eine Gruppe an Lichtquellen-Gruppen blaues Licht emittiert, und wobei jede Gruppe von Lichtquellen-Gruppen zumindest eine Lichtquellen-Gruppe umfasst.

Eine erfindungsgemäße Beleuchtungsvorrichtung kann Bestandteil eines Scheinwerfers sein, also mit einem oder mehreren Lichtmodulen anderer Bauart zu einem Scheinwerfer kombiniert werden, oder der Fahrzeugscheinwerfer ist durch die Beleuchtungseinrichtung gebildet.

Im Folgenden ist die Erfindung an Hand der Zeichnung näher erörtert. In dieser zeigt
Fig. 1 eine schematische Darstellung eines erfindungsgemäßen Mikroprojektions-Lichtmoduls in einer Explosionsdarstellung,
Fig. 2a eine schematische Darstellung eines Mikro-Optiksystems eines erfindungsgemäßen Mikroprojektions-Lichtmoduls in einer perspektivischen Ansicht sowie eine vertikale Schnittebene,
Fig. 2b einen Schnitt durch das Mikro-Optiksystem der Figur 2a entlang der Ebene A-A,
Fig. 2c ein Mikro-Optiksystem der Figur 2a, mit einer horizontalen Schnittebene,
Fig. 2d einen Schnitt durch das Mikro-Optiksystem der Figur 2c entlang der Ebene B-B,
Fig. 3 eine schematische Darstellung einer ersten Blendenvorrichtung nach dem Stand der Technik mit einer, zwei oder mehr Blenden,
Fig. 3a eine schematische Darstellung einer Gesamtlichtverteilung mit Abbildungsfehlern, erzeugt mit einem Lichtmodul mit der ersten Blendenvorrichtung nach dem Stand der Technik aus Figur 3,
Fig. 3b die Teil-Lichtverteilungen mit Abbildungsfehlern, erzeugt mit den einzelnen Blenden der ersten Blendenvorrichtung nach dem Stand der Technik aus Figur 3, welche gemeinsam die Gesamtlichtverteilung aus Figur 3a bilden,
Fig. 4 eine erste Variante einer erfindungsgemäßen zweiten Blendenvorrichtung,
Fig. 4a die Teil-Lichtverteilungen ohne Abbildungsfehler, erzeugt mit den einzelnen Blenden der erfindungsgemäßen zweiten Blendenvorrichtung aus Figur 4,
Fig. 5 eine zweite Variante einer erfindungsgemäßen zweiten Blendenvorrichtung,
Fig. 5a die Teil-Lichtverteilungen ohne Abbildungsfehler, erzeugt mit den einzelnen Blenden der erfindungsgemäßen zweiten Blendenvorrichtung aus Figur 5,
Fig. 6a einen schematischen Ausschnitt aus einer Projektionseinrichtung eines erfindungsgemäßen Lichtmoduls in einteiliger Ausführung,
Fig. 6b einen schematischen Ausschnitt aus einer Projektionseinrichtung eines erfindungsgemäßen Lichtmoduls in zweiteiliger Ausführung,
Fig. 6c einen schematischen Ausschnitt aus einer Projektionseinrichtung eines erfindungsgemäßen Lichtmoduls in vierteiliger Ausführung,
Fig. 7 eine schematische Darstellung einer Beleuchtungsvorrichtung, aufgebaut aus einer Mehrzahl an erfindungsgemäßen Mikroprojektions-Lichtmodulen,
Fig. 8a - 8c unterschiedliche Varianten von Mikro-Optiksystemen,
Fig. 9a und Fig. 9b eine schematische Anordnung zur Erzeugung einer weißen Gesamtlichtverteilung unter Verwendung von Lichtquellen unterschiedlicher Farben, und
Fig. 10 bis Fig. 15 unterschiedliche Ausführungsformen der Blenden der zweiten Blendenvorrichtung.

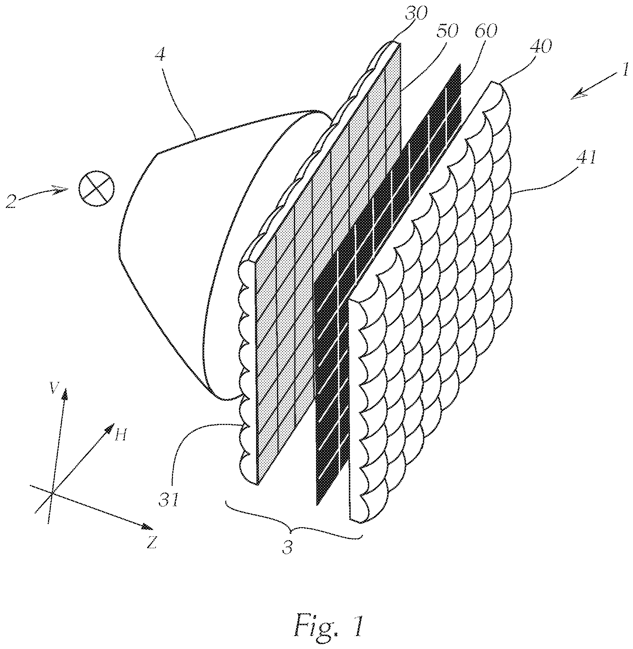

Figur 1 zeigt schematisch ein erfindungsgemäßes Mikroprojektions-Lichtmodul 1 für einen Kraftfahrzeugscheinwerfer. Das Mikroprojektions-Lichtmodul 1 eine Lichtquelle 2 sowie eine Projektionseinrichtung 3, welche das von der Lichtquelle 2 austretende Licht in einen Bereich vor dem Kraftfahrzeug in Form von zumindest einer Lichtverteilung abbildet. Die dargestellten Koordinaten bezeichnen die Lichtaustrittsrichtung Z, die horizontale Richtung H, welche normal auf Z und normal auf die vertikale Richtung V steht.

Dabei beziehen sich die Begriffe "horizontal" und "vertikal" auf den in einen im Fahrzeug verbauten Fahrzeugscheinwerfer eingebauten Zustand des Mikroprojektions-Lichtmoduls.

Bei der Lichtquelle 2 handelt es sich vorzugsweise um zumindest eine halbleiterbasierte Lichtquelle, welche beispielsweise eine, zwei oder mehr LEDs und/ oder Laserdioden aufweist.

Die Lichtquelle 2 strahlt ihr Licht in eine Vorsatzoptik 4, beispielsweise einen Kollimator ein, welche das Licht der Lichtquelle 2 im Wesentlichen parallel richtet, bevor es auf die Projektionseinrichtung 3 auftrifft.

Diese Projektionseinrichtung 3 umfasst, wie in Figur 1 dargestellt, eine Eintrittsoptik 30, welche aus einem Array an Mikro-Eintrittsoptiken 31 besteht, sowie eine Austrittsoptik 40, welche aus einem Array an Mikro-Austrittsoptiken 41 besteht, wobei jeder Mikro-Eintrittsoptik 31 genau eine Mikro-Austrittsoptik 41 zugeordnet ist. Darüber hinaus umfasst die Projektionseinrichtung eine erste Blendenvorrichtung 50 und eine zweite Blendenvorrichtung 60.

Die Mikro-Eintrittsoptiken 31 bei einem erfindungsgemäßen Lichtmodul gemäß Figur 1 sind dabei derart ausgebildet und/ oder sind die Mikro-Eintrittsoptiken 31 und die Mikro-Austrittsoptiken 41 derart zueinander angeordnet, dass das aus einer Mikro-Eintrittsoptik 31 austretende Licht genau nur in die zugeordnete Mikro-Austrittsoptik 41 eintritt, und wobei das von den Mikro-Eintrittsoptiken 31 vorgeformte Licht von den Mikro-Austrittsoptiken 41 in einen Bereich vor dem Kraftfahrzeug als zumindest eine Lichtverteilung LV1 - LV5; GLV abgebildet wird.

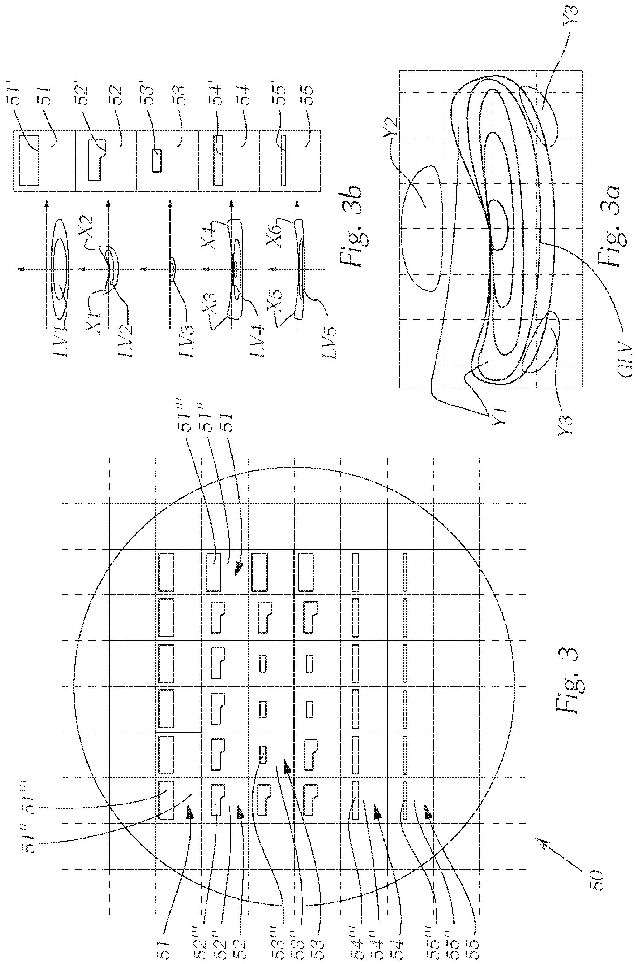

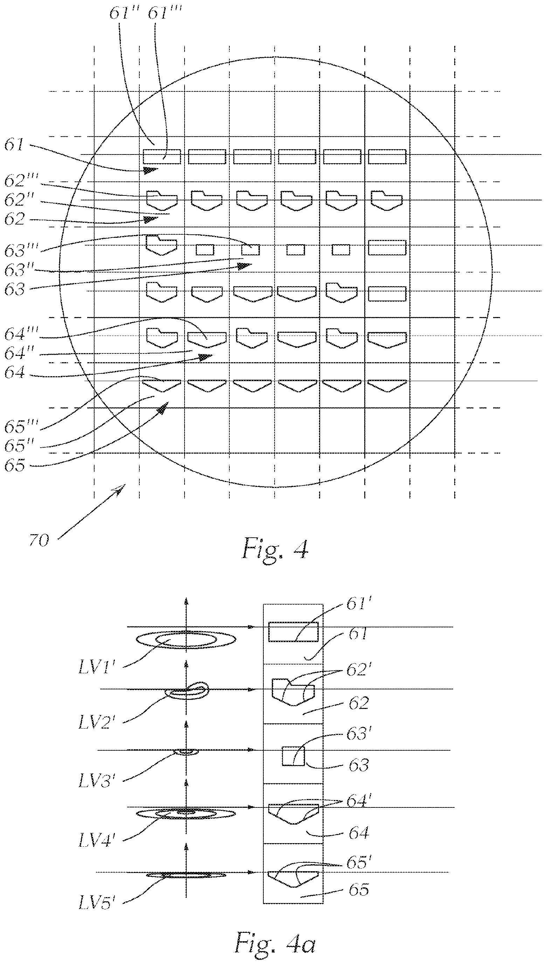

Weiters ist, wie dies den Figuren generell zu entnehmen ist, eine erste Blendenvorrichtung 50 und eine zweite Blendenvorrichtung 60 zwischen der Eintrittsoptik 30 und der Austrittsoptik 40 angeordnet. Mit der ersten Blendenvorrichtung 50 kann, wie dies weiter unten noch eingehender erörtert wird, der durch die Projektionseinrichtung durchtretende Lichtstrom beschnitten werden, um eine oder mehrere Lichtverteilungen mit definierten Formen, beispielsweise mit einer oder mehreren Hell-Dunkel-Grenzen, erzeugen zu können. Durch die zweite Blendenvorrichtung 60 kann die unter Verwendung der Blendenvorrichtung 50 erzeugte Lichtverteilung weitgehend korrigiert werden. So z.B. bei einer zur Erzeugung einer Abblendlichtverteilung angeordneten ersten Blendenvorrichtung 50 (sehe z.B. Fig. 3) dient die zweite Blendenvorrichtung 60, 70, 80 (Fig. 4, 5, 13 bis 15) unter anderem dazu, die Farbfehler (Farblängs- und/ oder Farbquerfehler) im Lichtbild zu reduzieren, welche Fehler zu einer Verfärbung der Hell-Dunkel-Grenze führen können und vom menschlichen Auge als unangenehm und störend empfunden werden.

Der Vollständigkeit halber sei hier noch angemerkt, dass die Darstellung in der Figur 1 mit im Wesentlichen heller erster Blendenvorrichtung 50 und im Wesentlichen dunkler zweiter Blendenvorrichtung 60 über die Ausgestaltung der Blendenvorrichtungen 50, 60 keine Aussagen trifft. Die Darstellung ist rein schematisch und soll lediglich das Vorhandensein einer ersten Blendenvorrichtung 50 und einer zweiten Blendenvorrichtung 60 sowie ihre ungefähre Position zeigen.

Die Eintrittsoptik 30 ist ein einziger Bauteil, welcher von den Mikro-Eintrittsoptiken 31 gebildet ist. Die Mikro-Eintrittsoptiken 31 liegen dabei unmittelbar, vorzugsweise ohne Abstand aneinander an und bilden einen Array wie oben erwähnt und in der Figur 1 gezeigt.

Ebenso gilt, dass die Austrittsoptik 40 ein einziger Bauteil ist, welcher von den Mikro-Austrittsoptiken 41 gebildet ist. Die Mikro-Austrittsoptiken 41 liegen dabei unmittelbar, vorzugsweise ohne Abstand aneinander an und bilden einen Array wie oben erwähnt und in der Figur 1 gezeigt.

Außerdem können, wie dies weiter unten noch erläutert wird, die Eintrittsoptik und die Austrittsoptik, gegebenenfalls gemeinsam mit je einer Blendenvorrichtung einstückig ausgebildet sein. Beispielsweise können die Eintrittsoptik mit der ersten Blendenvorrichtung und die Austrittsoptik mit der zweiten Blendenvorrichtung einstückig ausgebildet sein.

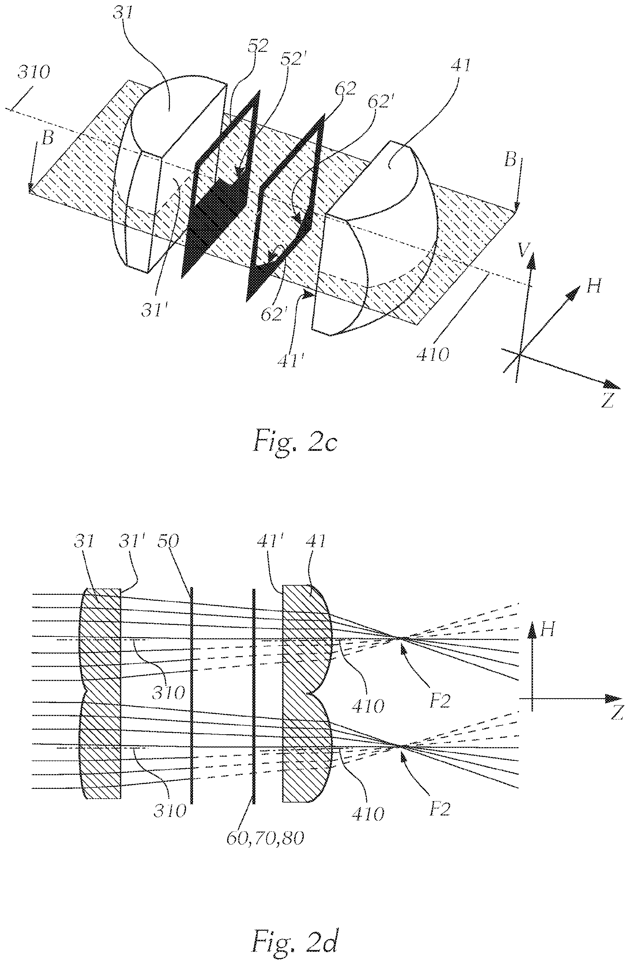

Figuren 2a und 2c zeigen ein Mikro-Optiksystem bestehend aus einer Mikro-Eintrittsoptik 31 und einer zugeordneten Mikro-Austrittsoptik 41, die wie oben beschrieben derart ausgebildet und/ oder angeordnet sind, dass Licht aus der gezeigten Mikro-Eintrittsoptik 31 ausschließlich in die zugeordnete Mikro-Austrittsoptik 41 gelangt. Dabei fällt die optische Achse 310 der Mikro-Eintrittsoptik 31 mit der optischen Achse 410 der Mikro-Austrittsoptik 41 zusammen. Weiters zeigt Figur 2a einen Teil der ersten Blendenvorrichtung 50 und der zweiten Blendenvorrichtung 60 im Bereich zwischen den beiden Mikro-Optiken 31, 41.

Betrachtet man das Mikro-Optiksystem aus den Figuren 2b und 2d, so erkennt man in Figur 2b, dass die Mikro-Eintrittsoptik 31 das durch sie durchtretende Licht in vertikaler Richtung in einen Mikro-Optik-Brennpunkt F1 fokussiert, wobei der Mikro-Optik-Brennpunkt F1 vorzugsweise mit dem Brennpunkt des aus Mikro-Eintrittsoptik 31 und der Mikro-Austrittsoptik 41 bestehenden Mikro-Optiksystems zusammenfällt. Figur 2b zeigt also Lichtstrahlen, welche in einer vertikalen Ebene (nämlich der Ebene A-A aus Figur 2a) liegen bzw. die Projektion von Lichtstrahlen in diese Ebene A-A.

Die aus der (hier nicht gezeigten) Vorsatzoptik parallel austretenden Lichtstrahlen werden also von der Mikro-Eintrittsoptik 31 in den Mikro-Optik-Brennpunkt F1 fokussiert, welcher in Lichtaustrittsrichtung gesehen vor der zugeordneten Mikro-Austrittsoptik 41 liegt.

Wie dies eingangs schon erwähnt wurde, soll hier der Vollständigkeit halber nochmals angemerkt werden, dass der einfacheren Formulierung halber hier und generell im Rahmen dieser gesamten Offenbarung an anderen Stellen von einer Fokussierung "in einen Brennpunkt" gesprochen wird. Tatsächlich, d.h. in der Realität werden dabei allerdings die Lichtstrahlen nicht in einem einzelnen Brennpunkt fokussiert sondern werden in eine Brennfläche abgebildet, welche den besagten Brennpunkt enthält. Diese Brennfläche kann eine Brennebene sein, in der Regel ist diese Brennfläche aber in Folge von Abbildungsfehlern (Aberrationen) und Korrekturen höherer Ordnungen, welche Korrekturen bei der Betrachtung der Lichtausbreitung von Lichtstrahlen, welche einen großen Winkel zur optischen Achse bilden, neben der paraxialen Näherung zu berücksichtigen sind, nicht eben sondern kann auch gekrümmt "ausgebildet" sein, d.h. die Lichtstrahlen werden in eine gekrümmte Fläche, welche den Brennpunkt enthält, abgebildet. Dabei führt die Krümmung der Brennfläche zu Fehlern bei der erzeugten Lichtverteilung (siehe Fig. 3a und Fig. 3b).

Jedes Mikro-Optiksystem verfügt somit über einen Brennpunkt F1, welcher zwischen Eintrittsoptik und Austrittsoptik liegt, und in welchen vorzugsweise Licht der zugehörigen Mikro-Eintrittsoptik fokussiert wird.

Darüber hinaus weist die Mikro-Austrittsoptik 41 einen Brennpunkt auf, welcher Brennpunkt mit dem Mikro-Optik-Brennpunkt F1 und mit dem Brennpunkt der der Mikro-Austrittsoptik 41 zugehörigen Mikro-Eintrittsoptik 31 zusammenfällt. Licht wird also in den Brennpunkt F1 fokussiert und anschließend beim Durchtritt durch die zugehörige Mikro-Austrittsoptik 41 entsprechend in der vertikalen Richtung kollimiert und in einen Bereich vor dem Fahrzeug projiziert, wie dies in Figur 2b schematisch dargestellt ist.

Figur 2d zeigt weiters das Verhalten in horizontaler Richtung, d.h. es werden Strahlen betrachtet, die in einer horizontalen Ebene, etwa in der Ebene B-B aus Figur 2c liegen bzw. die Projektion von Strahlen in diese Ebene. Wie in Figur 2d zu erkennen ist, weitet jedes Mikro-Optiksystem bestehend aus Mikro-Eintrittsoptik 31 und Mikro-Austrittsoptik 41 das durch sie durchtretende Licht in horizontaler Richtung auf. Dazu fokussiert jedes Mikro-Optiksystem das durch dieses Mikro-Optiksystem durchtretende Licht in horizontaler Richtung auf einen Brennpunkt F2, welcher hinter (in Hauptabstrahlrichtung) der Mikro-Austrittsoptik 41 liegt. In horizontaler Richtung wird das Licht also verstreut, um die gewünschte Breite der Teillichtverteilungen der einzelnen Mikro-Optiksysteme zu erreichen.

Es sei an dieser Stelle noch einmal vermerkt, dass hier idealisierte optische Systeme beschrieben sind; in der Praxis werden häufig sowohl die erste Optik (Mikro-Eintrittsoptik) als auch die zweite Optik (Mikro-Austrittsoptik) eines Mikro-Optiksystems als Freiform ausgeführt, wodurch sich eine Abbildung wie oben beschrieben in eine Brennfläche ergibt. Darüber hinaus wird zumindest ein Teil SL des Lichts aus einem Mikro-Optiksystem zwischen der Mikro-Eintrittsoptik 31 und der zugehörenden Mikro-Austrittsoptik austreten und in ein mit dem einen Mikro-Optiksystem benachbarten Mikro-Optiksystem gestreut (Fig. 2b). Es kommt also zu einem so genannten Übersprechen zwischen den Mikro-Optiksystemen, wodurch eine fehlerhafte Lichtverteilung (siehe 3a, 3b) erzeugt wird. Ein wesentliches Merkmal der oben beschriebenen Mikro-Optiksysteme, dass diese in der Horizontalen das durch sie durchtretende Licht aufweiten.

Die Mikro-Eintrittsoptiken 31 sind vorzugsweise als Sammeloptiken ausgebildet, welche Licht in vertikaler und/ oder horizontaler Richtung sammeln. Dabei können die Mikro-Eintrittsoptiken 31 z.B. als Freiform-Optiken ausgebildet sein.

Der Einsatz der in vertikaler Richtung V und/ oder in horizontaler Richtung H sammelnden Mikro-Eintrittsoptiken, beispielsweise Linsen, hängt von der jeweiligen Anwendung des Mikroprojektions-Lichtmoduls ab. So beispielsweise können für die Erzeugung einer breiten Lichtverteilung (e.g. einer Abblendlichtverteilung) Mikro-Eintrittsoptiken 31 eingesetzt werden, welche das Licht in vertikaler Richtung V sammeln (Fig. 2b) und in horizontaler Richtung H im Wesentlichen defokussiert lassen (Fig. 2d) oder gar aufweiten. Dabei können die Mikro-Austrittsoptiken 41 so angeordnet werden, dass ihre Brennpunkte in vertikaler Richtung V mit dem Brennpunkt F1 der entsprechenden Mikro-Eintrittsoptiken zusammenfallen. Dies kann dazu führen, dass das aus den Mikro-Optiksystemen austretende Licht in horizontaler Richtung H in Brennpunkt F2 fokussiert wird, wobei diese Brennpunkte F2 im Wesentlichen in einer horizontalen Ebene liegen. Dadurch dass die im Wesentlichen in einer horizontalen Ebene liegenden Brennpunkte F2 in einem geringen Abstand nach den Mikro-Austrittsoptiken angeordnet sind, weitet jedes Mikro-Optiksystem das durch dieses Mikro-Optiksystem durchtretende Lichtbündel auf, wie beispielsweise aus Fig. 2d ersichtlich ist. Dabei wird hier unter "geringem Abstand" eine Größe im Millimeterbis Zentimeterbereich, beispielsweise in einem Bereich von 1 mm bis 10 cm, verstanden, welcher als "gering" im Vergleich zu dem Abstand in dem eine lichttechnische Messung im KFZ-Bau durchgeführt wird (eine von einem Kraftfahrzeugscheinwerfer abgestrahlte Lichtverteilung wird üblicherweise an einem in einem Abstand von 25 Metern quer zur Hauptabstrahlrichtung aufgestellten Messschirm vermessen). Zum Erzeugen einer weniger breiten Lichtverteilung, beispielsweise einer Fernlicht-Teilverteilung, können sowohl in horizontaler als auch in vertikaler Richtung sammelnde Mikro-Eintrittsoptiken herangezogen werden. Dabei würde jede Mikro-Eintrittsoptik das Licht sowohl in vertikaler als auch in horizontaler Richtung auf einen Brennpunkt fokussieren, welcher Brennpunkt vor der Mikro-Austrittsoptik liegt. Dadurch kann eine Aufweitung des durch das Mikro-Optiksystem durchtretenden Lichtbündels in horizontaler Richtung vermieden werden und eine im Wesentlichen (bei einer Projektion auf den oben erwähnten Messschirm) ovalförmige Lichtverteilung, welche beispielsweise zur Erzeugung einer Fernlichtverteilung verwendet werden kann, erzeugt werden.

Die Mikro-Austrittsoptiken 41 sind üblicherweise als Projektionsoptiken ausgebildet, z.B. als sphärische oder asphärische Linsen. Es kann auch vorgesehen sein, dass die Mikro-Austrittsoptiken 41 als Freiform-Linsen ausgebildet sind.

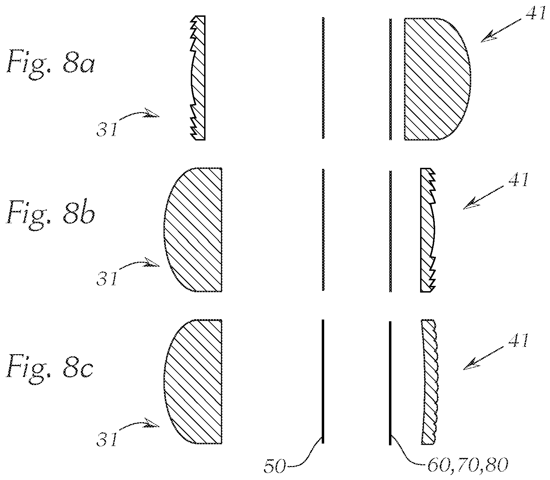

An dieser Stelle soll dabei kurz auf die Figuren 8a bis 8c verwiesen werden: oben und in der weiteren Beschreibung wird davon ausgegangen, dass jede Mikro-Eintrittsoptik 31 und jede Mikro-Austrittsoptik 41 jeweils aus einer einzigen Linse gebildet sind. Es kann aber auch vorgesehen sein, dass entweder die Mikro-Eintrittsoptiken 31 und/ oder die Mikro-Austrittsoptiken 41 selbst noch einmal jeweils aus einer, zwei oder mehr von "Optiken" bzw. optischen Elementen bestehen. Jedes dieser "Mikro-Mikro-Optikelemente" einer Mikro-Optik muss dazu dieselbe Brennebene aufweisen. Beispielsweise kann eine oder können beide Mikro-Optiken Fresnel-Linsen sein, welche unterschiedliche optisch-wirksame Bereiche aufweisen. Jeder der optischen Bereiche (Mikro-Mikro-Optik) einer Mikro-Eintrittsoptik kann, muss aber nicht in jede Mikro-Mikro-Austrittsoptik Licht abstrahlen.

Figur 8a zeigt ein Beispiel, in welchem in einem Mikro-Optiksystem die Mikro-Eintrittsoptik 31 als Fresnel-Linse und die Mikro-Austrittsoptik 41 als "herkömmliche" Linse ausgebildet ist.

Figur 8b zeigt ein Beispiel, bei welchem die Mikro-Eintrittsoptik 31 als "herkömmliche" Linse und die Mikro-Austrittsoptik 41 als Fresnel-Linse ausgebildet ist.

Figur 8c zeigt ein Beispiel, bei welchem die Mikro-Eintrittsoptik als "herkömmliche" Linse und die Mikro-Austrittsoptik als Array von Mikro-Mikro-Linsen ausgebildet ist.

Die Figuren 8a - 8c zeigen lediglich einige denkbare Varianten, Kombinationen oder andere Unterteilungen der Mikro-Optiken und der Blendenvorrichtungen. Wichtig dabei ist, dass die zweite Blendenvorrichtung 60, 70 in die Lichtausbreitungsrichtung zwischen der ersten Blendenvorrichtung 50 und der Mikro-Austrittsoptik 41 angeordnet ist und als eine Aperturblende wirkt. Die Lage der zweiten Blendenvorrichtung 60, 70 ist im Strahlengang also nicht frei wählbar. Die erste Blendenvorrichtung 50 ist eine Leuchtfeld-/ Gesichtfeldblende. Dabei ist es hinsichtlich der Lichtbildqualität vorteilhaft, die erste Blendenvorrichtung in der Brennfläche oder in der Zwischenbildebene des Mikro-Optiksystems anzuordnen.

Weiters, wie Figuren 2a bzw. 2c zu entnehmen ist, sind die einander zugewandten Grenzflächen 31', 41' von einander zugeordneten Mikro-Eintrittsoptiken 31 und Mikro-Austrittsoptiken 41 kongruent zueinander ausgebildet und vorzugsweise auch kongruent zueinander angeordnet.

Außerdem ist es zweckmäßig, wenn die Grenzflächen 31', 41' plan ausgebildet sind.

In dem gezeigten Beispiel sind die Grenzflächen 31', 41' quadratisch ausgebildet, anderen Formen sind rechteckig oder hexagonal.

Die optischen Achsen 310, 410 (Figuren 2b, 2d) von einander zugeordneten Mikro-Eintrittsoptiken 31 und Mikro-Austrittsoptiken 41 verlaufen günstiger Weise parallel zueinander, wobei es insbesondere von Vorteil ist, wenn die optischen Achsen 310, 410 zusammenfallen.

Die erste Blendenvorrichtung 50 liegt in einer Ebene, welche von den Mikro-Optik-Brennpunkten F1 aufgespannt ist. Vorzugsweise weist dabei die Blendenvorrichtung 50 für jedes Mikro-Optiksystem (siehe Figur 2a, 2c) jeweils eine Blende auf, wobei die Blende eine oder mehrere optisch wirksame Blendenkanten aufweist.

Die zweite Blendenvorrichtung 60 liegt zwischen der ersten Blendenvorrichtung 50 und der Austrittsoptik 40. Vorzugsweise weist dabei die zweite Blendenvorrichtung 60 für jedes Mikro-Optiksystem (siehe Figur 2a, 2c) jeweils eine Blende auf, wobei die Blende eine oder mehrere optisch wirksame Blendenkanten aufweist und dazu dient das Streulicht SL (Fig. 2b) nicht durch zu lassen.

Die Figuren 2a, 2c zeigen dabei ein Mikro-Optiksystem, welchem eine erste Blende 52 mit einer optisch wirksamen Blendenkante 52' und eine zweite Blende 62 mit einer weiteren optisch wirksamen Kante 62' zugeordnet ist. Das durch dieses System durchtretende Licht wird zunächst entsprechend der ersten Blendenkante 52' beschnitten und die Blendenkante 52' wird im Lichtbild als Hell-Dunkel-Grenze abgebildet. Des Weiteren wird das Licht entsprechend der zweiten Blendenkante 62' dergestalt beschnitten, dass es kein Übersprechen zwischen den einzelnen Mikro-Optiksystemen stattfindet und die durch die Krümmung der Brennfläche entstandenen Abbildungsfehler der Lichtverteilung GLV (siehe Fig. 3a, 3b) behoben sind.

Die erste Blendenvorrichtung 50 und die zweite Blendenvorrichtung 60 weisen für zumindest ein Paar von einander zugeordneten Mikro-Eintritts- und Mikro-Austrittsoptiken 31, 41 eine Blende auf. Vorzugsweise weisen die erste Blendenvorrichtung 50 und die zweite Blendenvorrichtung 60 allerdings für mehrere Paare, und insbesondere für alle Paare eine Blende 51, 52, 53, 54, 55 bzw. 61, 62, 63, 64, 65 mit jeweils zumindest einer, beispielsweise genau einer optisch wirksamen Blendenkante 51', 52', 53', 54', 55' bzw. 61', 62', 63', 64', 65' auf.

Die erste, aus dem Stand der Technik bekannte Blendenvorrichtung 50 ist in Figur 3 schematisch dargestellt. Figur 3 zeigt die erste Blendenvorrichtung 50 in einer Ansicht von Vorne, wobei die erste Blendenvorrichtung 50 fünf unterschiedliche Typen von Blenden 51 - 55 aufweist. Jede dieser Blenden 51 - 55 besteht aus einem Licht undurchlässigen Material 51" - 55", welches genau eine (wie dargestellt) oder mehrere (nicht dargestellt) lichtdurchlässige Durchbrüche 51''' - 55''' aufweist, durch welche Licht durchtreten kann. Die Blendenkanten 51', 52', 53', 54', 55' der Blenden werden im jeweiligen Teil-Lichtbild als oben liegende Hell-Dunkel-Grenzen, welche das Lichtbild nach oben hin begrenzt, abgebildet.

Jede dieser Blenden ist genau einem Mikro-Optiksystem zugeordnet, und wenn alle Mikro-Optiksysteme mit Licht bestrahlt werden, ergibt sich eine Gesamtlichtverteilung GLV wie in Figur 3a schematisch dargestellt als Überlagerung aller Teil-Lichtverteilungen. Bei der gezeigten Gesamtlichtverteilung GLV handelt es sich in dem gezeigten Beispiel um eine Abblendlichtverteilung mit asymmetrischer Hell-Dunkel-Grenze.

Figur 3b zeigt jeweils eine der Blenden 51 - 55 und links neben der Blende schematisch die jeweils damit erzeugte Teil-Lichtverteilung LV1 - LV5.

Dabei ist es klar erkennbar, dass durch die Abbildungsfehler und durch das Übersprechen zwischen benachbarten Mikro-Optik Systemen Abbildungsfehler-Teilbereiche X1, X2, X3, X4, X5, X6 in den Teil-Lichtverteilungen LV2, LV4, LV5 entstehen, deren Überlagerung zur Entstehung von Abbildungsfehler-Großbereichen Y1, Y2, Y3 in der Gesamtlichtverteilung GLV führt.

Fig. 4 zeigt eine zweite erfindungsgemäße Blendenvorrichtung 60, mit derer Hilfe Abbildungsfehler behoben werden. Dabei ist die zweite Blendenvorrichtung 60 in einer Ansicht von Vorne gezeigt. Es sind fünf unterschiedliche Typen von Blenden 61 bis 65 zu erkennen, die die zweite Blendenvorrichtung 60 aufweist. Jede dieser Blenden 61 bis 65 besteht aus einem Licht undurchlässigen Material 61", 62", 63", 64", 65", welches genau eine (wie dargestellt) oder mehrere (nicht dargestellt) lichtdurchlässige Durchbrüche 61"', 62"', 63'", 64'", 65'" aufweist, durch welche Licht durchtreten kann. Durch die Durchbrüche wird das mithilfe der ersten Blendenvorrichtung bereits beschnittene Lichtbild weiterhin derart beschnitten, dass keine Abbildungsfehler-Teilbereiche X1 bis X6, und infolgedessen auch keine Abbildungsfehler-Großbereiche Y1, Y2 bei den erzeugten Teil-Lichtverteilungen und Lichtverteilungen mehr vorhanden sind. Dies wird durch die Formung der Blendenkanten erreicht. Als besonders vorteilhaft hat sich dabei eine giebelförmige, aber im Allgemeinen von der Mitte nach außen hin schräg aufsteigende Form der unteren Blendenkante 62', 63', 64', 65' der Blenden erwiesen. Diese werden im jeweiligen Teil-Lichtbild als oben liegende Hell-Dunkel-Grenzen, welche das Lichtbild nach oben hin begrenzt, abgebildet. Die Lichtundurchlässigen Bereiche 61" bis 65" sind dabei derart ausgebildet und dazu eingerichtet, dass kein Übersprechen zwischen den Mikro-Optiksystemen stattfindet, d.h. kein Streulicht SL (Teil SL des Lichts in Fig. 2d) aus einem Mikro-Optiksystem in das benachbarte Mikro-Optiksystem gelangt. Dadurch wird der Abbildungsfehler Y2 reduziert bzw. behoben.

Figur 4a zeigt jeweils eine der Blenden 61 - 65 und links neben der Blende schematisch die jeweils damit erzeugte Teil-Lichtverteilung LV1' - LV5' ohne Abbildungsfehler X1 - X6, Y1, Y2.

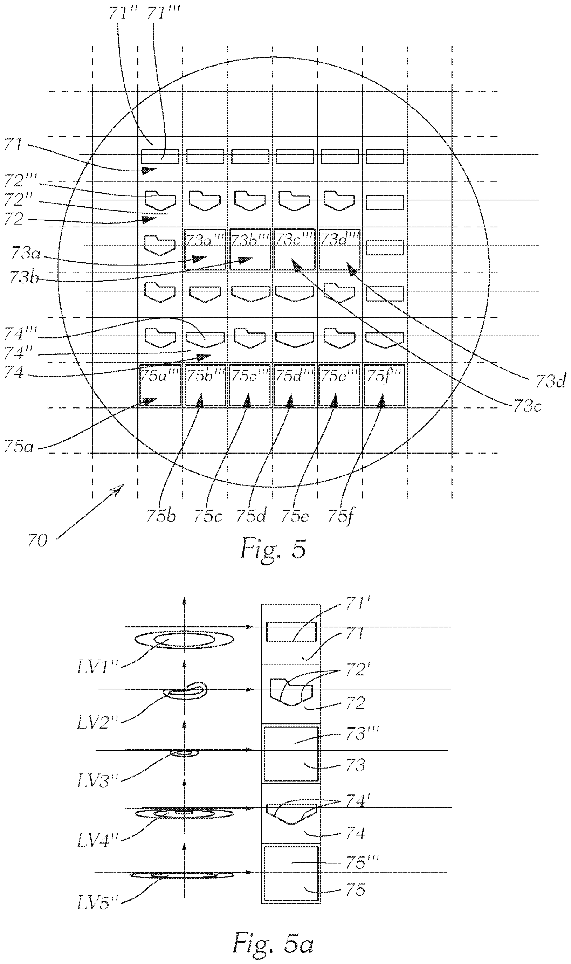

Fig. 5 zeigt ein weiteres Ausführungsbeispiel der zweiten erfindungsgemäßen Blendenvorrichtung 70. Verglichen mit der zweiten Blendenvorrichtung 60 der Figuren 4 und 4a weist zumindest ein Teil der Blenden 73a bis 73d und 75a bis 75f der zweiten Blendenvorrichtung 70 der Fig. 5 jeweils einen lichtdurchlässigen Durchbruch 73a'" bis 73d'" und 75a'" bis 75f'" auf. Dabei sind die Blenden 73a bis 73d und 75a bis 75f derart angeordnet, dass das durch ihre Durchbrüche 73a"' bis 73d'" und 75a'" bis 75f'" durchtretende Licht Teil-Lichtverteilungen LV3" und LV5" (Fig. 5a) bildet, wobei die Teil-Lichtverteilungen LV3" und LV5" zu einem Bereich in der Mitte der Gesamtlichtverteilung, d.h. rund um das gewünschte Maximum der Beleuchtungsstärke der abgestrahlten Lichtverteilung, beitragen in welchem Bereich beispielsweise eine größere Beleuchtungsstärke benötigt wird.

Die in der Figur 5 dargestellte Ausführungsform der zweiten Blendenvorrichtung 70 ist besonders vorteilhaft, da z.B. das Verwenden der zweiten Blendenvorrichtung 60 aus Figur 4 dazu führen würde, dass der Großteil des Lichtstrom abgeschattet würde und deshalb beispielsweise gesetzlich vorgeschriebene Lichtstromwerte im HV-Punkt nicht erreicht würden. Der Grund dafür ist, dass das für die Erzeugung der Teil-Lichtverteilungen LV3 bis LV5 notwendige Licht stark in der Brennfläche bzw. Zwischenbildebene der Projektionseinrichtung fokussiert wird. Die weitere Strahlausbreitung erfolgt danach dergestalt, dass einige der Lichtstrahlen einen großen Winkel zur optischen Achse bilden können, sodass die Durchbrüche 73a'" bis 73d'" und 75a'" bis 75f'" der zweiten Blendenvorrichtung 70 sehr groß sein müssen, damit eine genügende Lichtmenge durchgelassen wird.

Auf diese, in Figuren 4, 4a, 5, 5a dargestellte Weise kann z.B. eine abbildungsfehlerfreie Abblendlichtverteilung mit einem erfindungsgemäßen Lichtmodul erzeugt werden, wobei zu der abbildungsfehlerfreien Abblendlichtverteilung einzelne Mikro-Optiksysteme jeweils einen definierten Beitrag in Form einer abbildungsfehlerfreien Teil-Lichtverteilung erzeugen.

Mit dieserart Lichtmodulen lassen sich darüber hinaus beliebige abbildungsfehlerfreie Gesamtlichtverteilungen erzeugen. Durch gruppenweises Anleuchten von Mikro-Optiksystemen mit der ersten und der zweiten Blende mit jeweils zumindest einer eigenen Lichtquelle können gezielt vorgegebene (und durch die Form der Blendenkante bestimmte) abbildungsfehlerfreie Teil-Lichtverteilungen aktiviert (oder ausgeblendet) werden, sodass sich z.B. eine dynamische Lichtverteilung erzeugen lässt.

Die Gestaltung der Eintrittsoptik(en) und der Austrittsoptik(en) lässt unter Umständen nur eine begrenzte Formung der Lichtverteilung zu. Durch die Verwendung von vorzugsweise standardisierten Blenden wie oben beschrieben lassen sich eine, zwei oder mehr Teil-Lichtverteilungen erzeugen, welche bei entsprechender Auswahl zu der gewünschten Gesamtlichtverteilung führen.

Die Blenden können z.B. auch als einzelne Blenden ausgeführt sein, welche die Blendenvorrichtungen "bilden", vorzugsweise handelt es sich aber wie gezeigt um Blendenvorrichtungs-Bauteile, etwa ebene Folien etc., in welchen entsprechende Öffnungen/ Durchbrüche zum Durchtritt von Licht vorgesehen sind.

Bei der Anordnung der zweiten Blendeneinrichtung 60, 70 ist darauf Bedacht zu nehmen, dass diese bezüglich der ersten Blendenvorrichtung 50 richtig positioniert ist. D.h. im eingebauten Zustand beider Blendenvorrichtungen sollen die Typen der Blenden der zweiten Blendenvorrichtung 60, 70 den bestimmten Typen der ersten Blendenvorrichtung 50 korrespondieren, wie es z.B. den Figuren 2a und 2c zu entnehmen ist. Bezugnehmend auf Fig. 3, Fig. 4 und Fig. 5 sollen die Blenden der ersten Blendenreihe 51 der ersten Blendenvorrichtung 50 den Blenden der ersten Blendenreihe 61, 71 der zweiten Blendenvorrichtung 60, 70 korrespondieren, die Blenden der zweiten Blendenreihe 52 der ersten Blendenvorrichtung 50 den Blenden der zweiten Blendenreihe 62, 72 der zweiten Blendenvorrichtung 60, 70 korrespondieren usw.

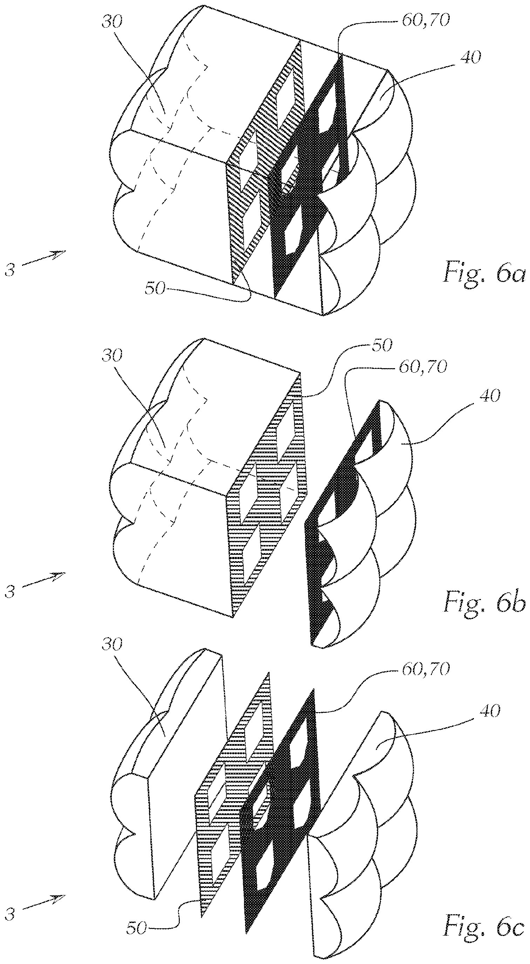

Wie weiter oben schon kurz angesprochen, kann bei einer ersten Ausgestaltung der Erfindung, wie in Figur 6a gezeigt, vorgesehen sein, dass die Projektionseinrichtung 3 bestehend aus Eintrittsoptik 30 und Austrittsoptik 40 einer ersten Blendeneinrichtung 50 und einer zweiten Blendeneinrichtung 60, 70, einteilig ausgebildet ist. Bei dem Optikkörper handelt es sich beispielsweise um eine Kunststoff-Optik, welche zur Realisierung von Blendenvorrichtungen gezielt verkohlt wurde. Eine solche Verkohlung kann etwa durch Laserstrahlen oder Elektronenstrahlen etc. erfolgen.

Bei einer zweiten Variante, die in Figur 6b gezeigt ist, ist vorgesehen, dass die Projektionseinrichtung 3 aus zwei getrennten Bauteilen, einer Eintrittsoptik 30 und einer Austrittsoptik 40 gebildet ist, die typischer Weise auch in einem Abstand zueinander angeordnet sind. Dabei ist es zweckmäßig, wenn die erste Blendenvorrichtung 50 auf der der Austrittsoptik 40 zugewandten Grenzfläche 31' der Eintrittsoptik 30 und die zweite Blendenvorrichtung 60, 70 auf der der Eintrittsoptik 30 zugewandten Grenzfläche 41' der Austrittsoptik 40 angeordnet sind.

Eine Blendenvorrichtung kann dabei durch Bedampfen einer der Grenzflächen 31' bzw. 41' erzeugt werden, oder durch Aufbringen einer absorbierenden Schicht, welche anschließend gezielt z.B. mittels Laserstrahlen wieder abgetragen wird. Es ist auch denkbar, auf eine derart mit Blendenvorrichtung versehene Eintrittsoptik eine Austrittsoptik mittels z.B. ZweiKomponenten-Spritzgusses aufzubringen, sodass sich schlussendlich wieder ein Bauteil ergibt.

Es kann in diesem Fall aber auch vorgesehen sein, dass beide Blendenvorrichtungen 50, 60, 70 als von der Eintrittsoptik 30 und der Austrittsoptik 40 getrennt ausgebildete Bauteile ausgebildet sind, wie dies in Figur 6c gezeigt ist. In diesem Fall können die Blendenvorrichtungen 50, 60, 70 in Form einer präzisen Maske z.B. aus Metall (Lochmaske, Strichmasken, Raster, etc.) eingefügt werden.

Die in Figuren 6a bis 6c gezeigten Varianten können selbstverständlich kombiniert werden. Es kann z.B. aus Gründen der Einstellbarkeit der Projektionseinrichtung 3 (Abstände der Brennebenen, Orientierung der optischen Achse usw.) von Vorteil sein die zweite Blendenvorrichtung 60, 70 gentrennt von der Austrittsoptik 40, die erste Blendenvorrichtung aber einstückig mit der Eintrittsoptik 30 oder die erste Blendenvorrichtung 50 mit der zweiten Blendenvorrichtung 60, 70 einstückig aber von den Eintrittsoptik 30 und der Austrittsoptik getrennt auszubilden. Vorteilhaft hinsichtlich der Schärfe des Lichtbildes ist, wenn die erste Blendenvorrichtung 50 in der durch die Brennpunkte der Mikro-Optiksysteme aufgespannten Fläche, welche die Brennfläche der Projektionseinrichtung 3 bildet, angeordnet ist. Dabei wird das Lichtbild durch die Form der ersten Blendenvorrichtung 50 bestimmt und durch die zweite Blendenvorrichtung 60, 70 korrigiert und in einen abbildungsfehlerfreien Zustand gebracht.

An dieser Stelle sei noch ausgeführt, dass in den bisherigen Figuren die Innenflächen der Optiken 30, 40 plan ausgebildet sind, während die Außenflächen gekrümmt dargestellt sind. Grundsätzlich ist es auch möglich, dass eine oder beide Innenflächen der Optiken 30, 40 gekrümmt ausgebildet sind, allerdings ist dies nur im Falle einer zwei- oder mehrteiligen Ausgestaltung möglich.

Eine einstückige Ausgestaltung hat den Vorteil, dass nach der Fertigung, die exakt erfolgen muss, ein einziger, stabiler Bauteil vorhanden ist, der problemlos verbaut werden kann.

Bei einem herkömmlichen Projektionssystem mit einer Projektionslinse weist die Linse typische Durchmesser zwischen 60 mm und 90 mm auf. Bei einem erfindungsgemäßen Modul weisen die einzelnen Mikro-Optiksysteme typische Abmessungen von ca. 2 mm x 2 mm (in V und H) und eine Tiefe (in Z) von ca. 6mm - 10 mm auf, sodass sich in Z-Richtung eine deutlich geringere Tiefe eines erfindungsgemäßen Moduls im Vergleich zu herkömmlichen Modulen ergibt.

Die erfindungsgemäßen Lichtmodul weisen eine geringe Bautiefe auf und sind grundsätzlich frei formbar, d.h. es ist z.B. möglich ein erstes Lichtmodul zur Erzeugung einer ersten Teillichtverteilung getrennt von einer zweiten Lichtmodul für eine zweite Teillichtverteilung auszugestalten und diese relativ frei, d.h. vertikal und/ oder horizontal und/ oder in der Tiefe zueinander versetzt anzuordnen, sodass sich auch Designvorgaben einfacher realisieren lassen.

Ein weiterer Vorteil eines erfindungsgemäßen Lichtmoduls ist jener, dass zwar die Projektionseinrichtung sehr genau herzustellen ist, was mit heutigen Produktionsmethoden aber problemlos möglich ist, dafür aber das exakte Positionieren der Lichtquelle(n) in Bezug auf die Projektionsoptik entfällt. Eine exakte Positionierung ist insofern nur noch von untergeordneter Bedeutung, als die zumindest eine Lichtquelle einen ganzen Array von Mikro-Eintrittsoptiken beleuchtet, die alle im Wesentlichen dasselbe Lichtbild erzeugen. Anders formuliert bedeutet dies nichts anderes, als dass die "eigentliche" Lichtquelle von der oder den realen Lichtquelle(n) und dem Array der Mikro-Eintrittsoptiken gebildet ist. Diese "eigentliche" Lichtquelle beleuchtet dann die Mikro-Austrittsoptiken und gegebenenfalls die zugeordneten Blenden. Nachdem nun aber die Mikro-Eintritts- und Mikro-Austrittsoptiken bereits optimal aufeinander abgestimmt sind, da diese quasi ein System bilden, fällt eine nicht exakte Positionierung der realen Lichtquelle(n) weniger ins Gewicht.

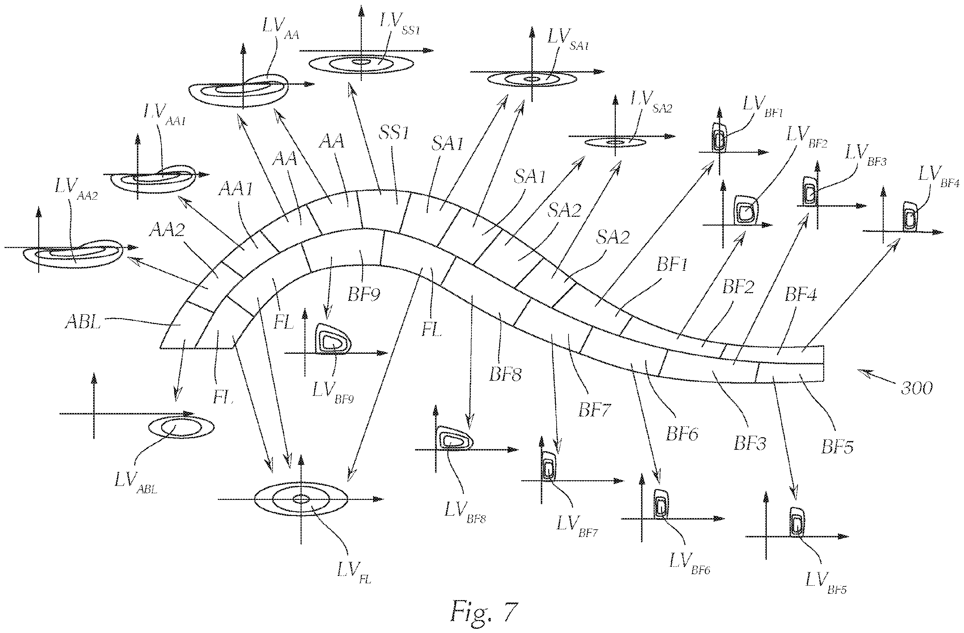

Figur 7 zeigt noch eine Beleuchtungsvorrichtung für einen Fahrzeugscheinwerfer gelöst, welche eine, zwei oder mehr Mikroprojektions-Lichtmodulen, wie sie oben beschrieben wurden, umfasst. Dabei sind mehrere Gruppen von unterschiedlichen Lichtmodulen vorgesehen, z.B. sind in Figur 7 Lichtmodule der Gruppen AA, AA1, AA2, SS1, BF1 - BF8, FL, ABL, SA1, SA2 dargestellt, die gemeinsam die Beleuchtungsvorrichtung bilden. Jede Gruppe AA, AA1, AA2, SS1, BF1 - BF8, FL, ABL, SA1, SA2 umfasst ein, zwei oder mehrere Lichtmodule.

In dem gezeigten Beispiel enthält jede Gruppe genau ein Lichtmodul, welche im Folgenden aufgezählt sind. Dabei bezeichnet:
AA ein Lichtmodul zur Erzeugung eines asymmetrischen abbildungsfehlerfreien Abblendlichts LV_{AA} im Fernfeld;
AA1, AA2 abbildungsfehlerfreies asymmetrisches Abblendlicht LV_{AA1}, LV_{AA2} im Fernfeld im Kurvenlichtmodul;
SS1 Lichtmodul zur Erzeugung einer symmetrischen abbildungsfehlerfreien Lichtverteilung LV_{SS1} (Vorfeld eines Abblendlichts, Stadtlicht);
BF1 ... BF8 Lichtmodule zur Erzeugung eines abbildungsfehler- und blendfreien Fernlichtes LV_{BF1} - LV_{BF8}; die einzelnen abbildungsfehlerfreien Lichtverteilungen LV_{BF1}-LV_{BF8} erzeugen gemeinsam eine abbildungsfehlerfreie Fernlichtverteilung bzw. einen Teil davon, die einzelnen abbildungsfehlerfreien Lichtverteilungen können bei Bedarf unabhängig voneinander ausgeblendet werden;
FL ein Lichtmodul zur Erzeugung eines abbildungsfehlerfreien Fernlichts LV_{FL};
ABL ein Lichtmodul zur Erzeugung eines abbildungsfehlerfreien Abbiegelichts LV_{ABL};
SA1, SA2 zusätzliche Lichtanteile für abbildungsfehlerfreies Autobahnlicht LV_{SA1}, LVs_{A2}.

Von Vorteil ist es bei einer solchen Beleuchtungsvorrichtung, wenn die Lichtquellen jeder Gruppe von Lichtmodulen AA, AA1, AA2, SS1, BF1 - BF8, FL, ABL, SA1, SA2 unabhängig von den Lichtquellen der anderen Gruppen ansteuerbar sind, sodass die einzelnen abbildungsfehlerfreien Lichtverteilungen bzw. Teillichtverteilungen unabhängig voneinander ein- und ausgeschaltet und/ oder gedimmt werden können.

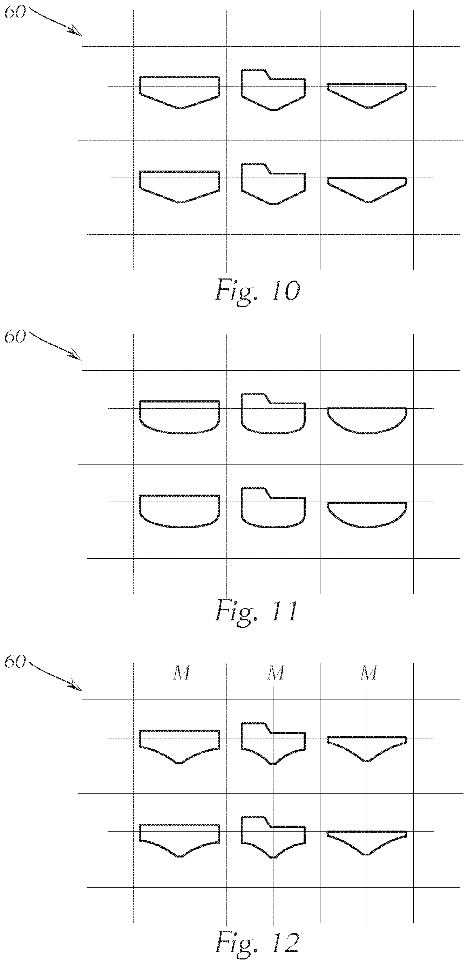

Figur 7 ist eine rein schematische Darstellung, und es ist im Zusammenhang mit Figur 7 von "Lichtmodulen" die Rede. Tatsächlich zeigt Figur 7 lediglich und rein schematisch die Projektionseinrichtungen AA, AA1, AA2, SS1, BF1 - BF8, FL, ABL, SA1, SA2 der einzelnen Mikro-Projektions-Lichtmodule, und wie in Figur 12 zu erkennen ist, bilden die Projektionseinrichtungen AA, AA1, AA2, SS1, BF1 - BF8, FL, ABL, SA1, SA2 der einzelnen Lichtmodule ein gemeinsames Bauteil in Form z.B. eines geschwungenen Bandes. Diese Projektionseinrichtungen können beispielsweise auf einer Folie angeordnet sein.

Es können mit der vorliegenden Erfindung somit die Linsenarrays aus Mikro-Eintritts- und Mikro-Austrittsoptiken frei geformt werden, und es können auch zwei oder mehrere erfindungsgemäße Lichtmodule über ein gemeinsames Projektionseinrichtungs-Bauteil zu einer Beleuchtungsvorrichtung zusammengefasst werden, wobei vorzugsweise dann jenen Bereichen des Projektionseinrichtungs-Bauteiles, welche einem bestimmten Lichtmodul (und somit einer unabhängig ansteuerbaren Lichtquelle) zugeordnet sind, die Mikro-Optiksysteme identische ausgebildet sind.

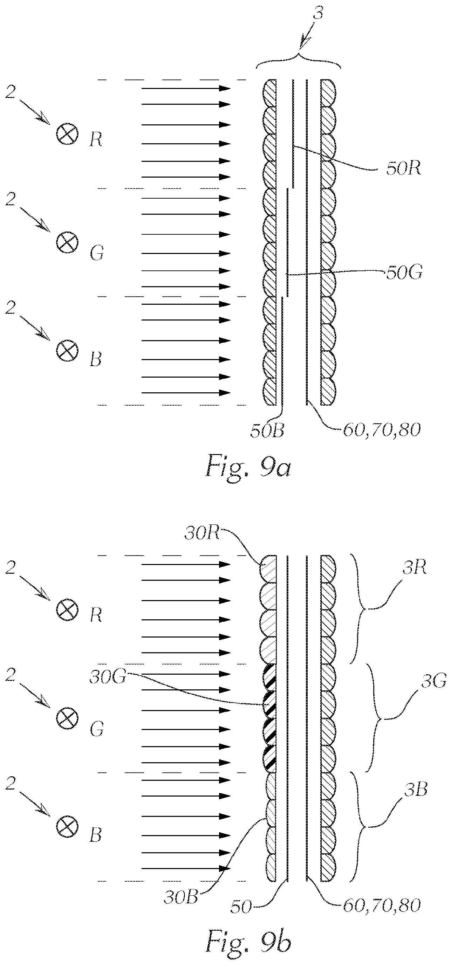

Figur 9a und Figur 9b zeigen zwei weitere Ausführungsformen. Dabei ist vorgesehen, dass unterschiedliche Bereiche, z.B. genau drei unterschiedliche Bereiche, von Mikro-Optiksystemen 3 mit Lichtquellen 2 unterschiedlicher Farbe R, G, B beleuchtet werden, beispielsweise ein Bereich mit rotem Licht R, ein anderer Bereich mit grünem Licht G und ein dritter Bereich mit blauem Licht B.

Die unterschiedlichen Bereiche können dabei zu einer Projektionseinrichtung 3 (Fig. 9a), aber auch zu unterschiedlichen (zwei oder mehreren, z.B. drei, wie Fig. 9b zeigt) Projektionseinrichtungen bzw. zu einer Projektionseinrichtung oder zu zwei oder mehreren, insbesondere drei Projektionseinrichtungen gehören. Wichtig ist dabei lediglich, dass jeder Bereich an Mikro-Optiksystemen dieselbe Lichtverteilung wie die anderen Bereiche erzeugt. Um den oben beschriebenen Farbfehlern Rechnung zu tragen, ist bei der Projektionseinrichtung der Fig. 9a vorgesehen, dass die erste Blendenvorrichtung drei Teil-Blendenvorrichtungen 50R, 50G, 50B umfasst, wobei jede Teil-Blendenvorrichtung in der zu der jeweiligen Farbe korrespondierenden Brennfläche angeordnet ist. So liegen die Brennpunkte der Mikro-Optiksysteme für das rote Licht L in die Lichtausbreitungsrichtung gesehen weiter vorn als die Brennpunkte der Mikro-Optiksysteme für das grüne Licht G, welche ihrerseits vor den Brennpunkten der Mikro-Optiksysteme für das blaue Licht B liegen, wie es der Fig. 9a zu entnehmen ist.

Die in der Fig. 9a gezeigte Ausführungsform hat den Vorteil, dass allen Lichtquellen, welche Licht unterschiedlicher Farben abstrahlen, eine einzige, vorzugsweise einstückig ausgebildete, Eintrittsoptik zugeordnet ist. Dabei kann auch vorgesehen sein, dass die erste Blendenvorrichtung und/ oder die zweite Blendenvorrichtung drei Teil-Blendenvorrichtungen umfasst, welche zur Korrektur der Farbfehler herangezogen werden können.

Bei der in Fig. 9b dargestellten Ausführungsform handelt es sich um drei Projektionseinrichtungen 3R, 3G, 3B, die miteinander einstückig oder voneinander getrennt ausgebildet sein können. Dabei sind die erste Blendenvorrichtung 50 und die zweite Blendenvorrichtung 60, 70 vorgesehen. Die Projektionsvorrichtungen weisen unterscheiden sich in dem Beispiel durch die Form der Eintrittsoptiken 30R, 30G, 30B, die derart ausgebildet sind, dass die Brennflächen der drei je einer Lichtfarbe korrespondierenden Projektionseinrichtungen 3R, 3G, 3B zusammenfallen. Dieser Effekt kann beispielsweise durch Anpassung der Dicke und/ oder der Krümmung der die Eintrittsoptiken bildenden Mikro-Eintrittsoptiken erreicht werden. Durch Ändern der Dicke und/oder der Krümmung der Mikro-Eintrittsoptiken werden die Brennweiten der Mikro-Optiksysteme dahingehend geändert, wodurch der Abstand zwischen der der Austrittsoptik 40 zugewandten Grenzfläche 31' der Eintrittsoptik 30 und der Brennfläche unabhängig von der Farbe des Lichts R, G, B festgelegt werden kann, wie es in Fig. 9b gezeigt ist. Die erste Blendenvorrichtung 50 der Fig. 9b, die vorzugsweise einstückig ausgebildet ist, ist dabei in den zusammenfallenden Brennflächen der Projektionseinrichtungen 3R, 3G, 3B angeordnet. Die in Fig. 9b gezeigte Ausführungsform hat den Vorteil der großen Designfreiheit, die beispielsweise durch drei voneinander getrennt ausgebildeten Projektionseinrichtungen 3R, 3G, 3B gewährt sein kann.

Durch Überlagerung der abbildungsfehlerfreien Lichtbilder aus den unterschiedlichen Bereichen ergibt sich dann insgesamt ein weißes abbildungsfehlerfreies Lichtbild.

Verwendet man in diesem Zusammenhang als Lichtquellen Laser-Lichtquellen - siehe dazu insbesondere auch die Erörterungen weiter oben -, so werden auf Grund der hohen Leuchtintensitäten von Lasern nur wenige Mikroprojektionsarrays (Bereiche) zur Erzeugung einer weißen Lichtverteilung benötigt, sodass sich in lateraler Richtung ein kleineres Lichtmodul erzeugen lässt.

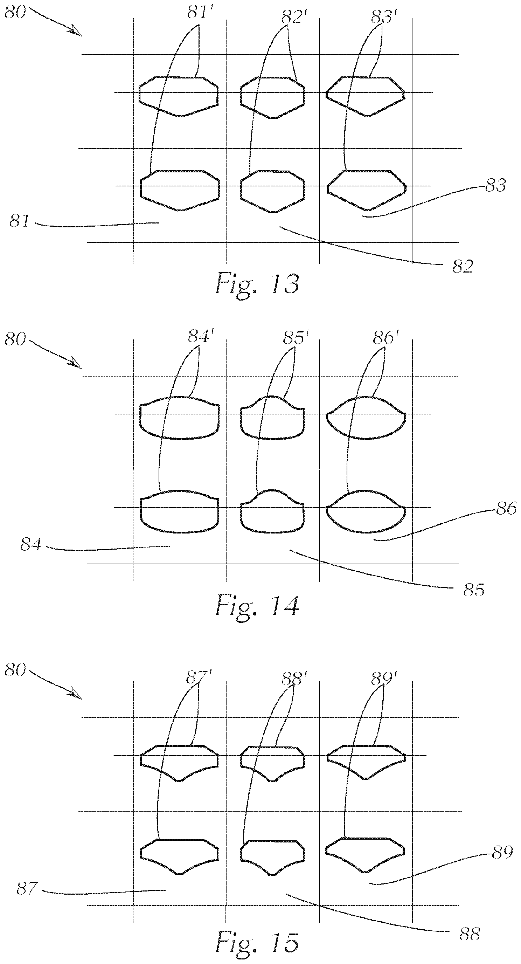

Abschließend sei angemerkt, dass die Blenden der zweiten Blendenvorrichtung unterschiedlich ausgebildete untere (zur Korrektur der Abbildungsfehler Y1, Y2 aus Fig. 3a) und/ oder obere (zur Korrektur der Abbildungsfehler Y3 aus Fig. 3a) optisch wirksame Blendenkanten aufweisen können. Dies ist in den Figuren 10 bis 15 thematisiert. Fig. 10 zeigt Beispiele von Blenden der zweiten Blendenvorrichtung 60, deren untere Blendenkanten als ein dreieckförmiger Giebel, der sich von der optischen Achse nach unten hin erstreckt, ausgebildet sind. Fig. 11 stellt Blenden dar, deren untere Blendenkannten als ein Segment einer Ellipse (ein Ellipsenbogen) insbesondere eines Kreises (ein Kreisbogen) ausgebildet sind. Die Blenden der Fig. 12 weisen untere Blendenkanten auf, welche Blendenkanten (für jeder der dargestellten Blenden) drei Blendenkanten-Segmente umfassen. Dabei sind zwei Blendenkanten-Segmente als nach innen der Blendenöffnung gekrümmte Ellipsenbögen bzw. Kreisbögen ausgebildet und bezüglich der vertikalen durch die optische Achse verlaufenden Mittellinie M spiegelsymmetrisch angeordnet. Das dritte Blendenkanten-Segment ist als eine Gerade ausgebildet. Die eben beschriebenen Ausbildungen der unteren Blendenkanten können zu der Korrektur der oben beschriebenen Abbildungsfehler Y1, Y2 aus der Fig. 3a beitragen. Die genaue Form der unteren Blendenkanten der zweiten Blendenvorrichtung 60 kann an den Strahlengang zwischen Mikro-Eintrittsoptik und Mikro-Austrittsoptik angepasst werden. Vorteilhaft ist es allerdings, wenn die unteren Blendenkanten zumindest zwei stetig ineinander übergehende Abschnitte aufweisen, wobei der erste (gezählt von links nach rechts) Abschnitt (in Bezug auf die vertikale Richtung V) fallend ist und der letzte Abschnitt steigend ist. Fig. 13 zeigt Beispiele von Blenden der zweiten Blendenvorrichtung 80, deren obere Blendenkanten 81' bis 83' trapezförmig ausgebildet sind. Die unteren Blendenkanten sind den unteren Blendenkanten der Fig. 10 gleich ausgebildet. Fig. 14 stellt Blenden dar, deren obere Blendenkannten 84', 86' als ein Segment einer Ellipse (ein Ellipsenbogen) insbesondere eines Kreises (ein Kreisbogen) ausgebildet sind. Darüber hinaus zeigt die Fig. 14 eine obere Blendenkante 85', welche im Wesentlichen einen schweifgiebelförmigen Verlauf aufweist. Dieser gipfelförmige (mit einem nach außen der Blendenöffnung gerichteten) Verlauf kann steil-, flach- oder normalgipflig ausgebildet sein. Der Verlauf der unteren Blendenkanten der Fig. 14 ist dem Verlauf der unteren Blendenkanten der Fig. 11 im Wesentlichen gleich. Die Blenden der Fig. 15 weisen untere Blendenkanten auf, welche in ihrer Form den unteren Blendenkanten der Fig. 12 im Wesentlichen gleich sind. Die oberen Blendenkanten 87' bis 89' sind wie in Fig. 13 trapezförmig. Die eben beschriebenen Ausbildungen der oberen Blendenkanten können zu der Korrektur der oben beschriebenen Abbildungsfehler Y3 aus der Fig. 3a beitragen. Die genaue Form der oberen Blendenkanten der zweiten Blendenvorrichtung 60, 70, 80 kann an den Strahlengang zwischen Mikro-Eintrittsoptik und Mikro-Austrittsoptik angepasst werden. Vorteilhaft ist es allerdings, wenn die oberen Blendenkanten zumindest zwei stetig ineinander übergehende Abschnitte aufweisen, wobei der erste (gezählt von links nach rechts) Abschnitt (in Bezug auf die vertikale Richtung V) steigend ist und der letzte Abschnitt fallend ist.

## Patentansprüche

1. Mikroprojektions-Lichtmodul (1) für einen Kraftfahrzeugscheinwerfer, umfassend
*) zumindest eine Lichtquelle (2) sowie
*) zumindest eine Projektionseinrichtung (3), welche das von der zumindest einen Lichtquelle (2) austretende Licht in einen Bereich vor dem Kraftfahrzeug in Form von zumindest einer Lichtverteilung abbildet, wobei
die Projektionseinrichtung (3) umfasst:
-) eine Eintrittsoptik (30), welche eine, zwei oder mehr Mikro-Eintrittsoptiken (31) aufweist, welche vorzugsweise in einem Array angeordnet sind,
-) eine Austrittsoptik (40), welche eine, zwei oder mehr Mikro-Austrittsoptiken (41) aufweist, welche vorzugsweise in einem Array angeordnet sind, wobei
jeder Mikro-Eintrittsoptik (31) genau eine Mikro-Austrittsoptik (41) zugeordnet ist,
wobei die Mikro-Eintrittsoptiken (31) derart ausgebildet und/ oder die Mikro-Eintrittsoptiken (31) und die Mikro-Austrittsoptiken (41) derart zueinander angeordnet sind, dass im Wesentlichen das gesamte aus einer Mikro-Eintrittsoptik (31) austretende Licht genau nur in die zugeordnete Mikro-Austrittsoptik (41) eintritt, und wobei das von den Mikro-Eintrittsoptiken (31) vorgeformte Licht von den Mikro-Austrittsoptiken (41) in einen Bereich vor dem Kraftfahrzeug als zumindest eine Lichtverteilung (LV1 - LV5; GLV) abgebildet wird, wobei
eine Mikro-Eintrittsoptik (31) und eine der einen Mikro-Eintrittsoptik (31) zugeordnete Mikro-Austrittsoptik (41) ein Mikro-Optiksystem bilden, welches Mikro-Optiksystem zumindest einen Mikro-Optik-Brennpunkt (F1) aufweist, wobei vorzugsweise optische Achsen (310, 410) von den einander zugeordneten Mikro-Eintrittsoptiken (31) und Mikro-Austrittsoptiken (41) parallel zueinander verlaufen, insbesondere zusammenfallen, wobei zwischen der Eintrittsoptik (30) und der Austrittsoptik (40) eine erste Blendenvorrichtung (50) angeordnet ist, wobei die erste Blendenvorrichtung (50) in einer Ebene liegt, welche von den Mikro-Optik-Brennpunkten (F1) aufgespannt ist, wobei die erste Blendenvorrichtung (50) für zumindest ein Paar von einander zugeordneten Mikro-Eintritts- und Mikro-Austrittsoptiken (31, 41), vorzugsweise für mehrere Paare und insbesondere für alle Paare eine Blende (51 bis 55) mit jeweils zumindest einer, beispielsweise genau einer optisch wirksamen Blendenkante (51', 52', 53', 54', 55') aufweist,
**dadurch gekennzeichnet, dass** zwischen der Eintrittsoptik (30) und der Austrittsoptik (40) zumindest eine zweite Blendenvorrichtung (60, 70, 80) angeordnet ist,
welche zweite Blendenvorrichtung (60, 70, 80) für zumindest ein Paar von einander zugeordneten Mikro-Eintritts- und Mikro-Austrittsoptiken (31, 41) eine Blende (61 bis 65, 71 bis 75, 81 bis 89) mit jeweils zumindest einer optisch wirksamen Blendenkante (61' bis 65', 71' bis 75', 81' bis 89') aufweist, wobei die zweite Blendenvorrichtung (60, 70, 80) hinsichtlich der ersten Blendenvorrichtung (50) derart angeordnet ist, dass die Blenden (61 bis 65, 71 bis 75, 81 bis 89) der zweiten Blendenvorrichtung (60, 70, 80) bezüglich der Blenden (51 bis 55) der ersten Blendenvorrichtung (50) vertikal, d.h. parallel zu der vertikalen Richtung (V), versetzt sind.

2. Mikroprojektions-Lichtmodul nach Anspruch 1, **dadurch gekennzeichnet, dass** die zweite Blendenvorrichtung (60, 70, 80) zwischen der ersten Blendenvorrichtung (50) und der Austrittsoptik (40) angeordnet ist.

3. Mikroprojektions-Lichtmodul nach Anspruch 1 oder 2, **dadurch gekennzeichnet, dass** jede Mikro-Eintrittsoptik (31) das durch sie durchtretende Licht in den zumindest einen Mikro-Optik-Brennpunkt (F1) fokussiert.

4. Mikroprojektions-Lichtmodul nach Anspruch 1 bis 3, **dadurch gekennzeichnet, dass** ein Mikro-Optik-Brennpunkt (F1) jeder Mikro-Eintrittsoptik (31) in Lichtaustrittsrichtung vor der zugeordneten Mikro-Austrittsoptik (41) liegt, wobei die Mikro-Eintrittsoptiken (31) das durch sie durchtretende Licht in vertikaler Richtung jeweils auf den vor der Mikro-Austrittsoptik (40) liegenden Mikro-Optik-Brennpunkt (F1) fokussieren, und wobei die Mikro-Austrittsoptiken (41) einen jeweils mit dem Mikro-Optik-Brennpunkt (F1) der zugeordneten Mikro-Eintrittsoptik (31) zusammenfallenden Brennpunkt aufweisen.

5. Mikroprojektions-Lichtmodul nach einem der Ansprüche 1 bis 4, **dadurch gekennzeichnet, dass** jedes Mikro-Optiksystem das durch sie durchtretende Licht in horizontaler Richtung (H) aufweitet.

6. Mikroprojektions-Lichtmodul nach einem der Ansprüche 1 bis 5, **dadurch gekennzeichnet, dass** jede Mikro-Eintrittsoptik (31) als eine Sammeloptik ausgebildet ist, wobei vorzugsweise die Sammeloptik Licht in zumindest einer Richtung sammelt.

7. Mikroprojektions-Lichtmodul nach einem der Ansprüche 1 bis 8, **dadurch gekennzeichnet, dass** die einander zugewandten Grenzflächen (31', 41') von einander zugeordneten Mikro-Eintrittsoptiken (31) und Mikro-Austrittsoptiken (41) kongruent zueinander, vorzugsweise plan ausgebildet und vorzugsweise auch kongruent zueinander angeordnet sind

8. Mikroprojektions-Lichtmodul nach einem der Ansprüche 1 bis 7, **dadurch gekennzeichnet, dass** die zweite Blendenvorrichtung (60, 70, 80) für mehrere Paare und insbesondere für alle Paare von den einander zugeordneten Mikro-Eintritts- und Mikro-Austrittsoptiken (31, 41) eine Blende (61 bis 65, 71 bis 75, 81 bis 89) mit jeweils zumindest einer, beispielsweise genau einer optisch wirksamen Blendenkante (61' bis 65', 71' bis 75', 81' bis 89') aufweist, wobei vorzugsweise alle Blenden der zweiten Blendenvorrichtung (60, 70, 80) identische Blendenkanten aufweisen oder zumindest zwei Blenden der zweiten Blendenvorrichtung (60, 70, 80) unterschiedlich gestaltete Blendenkanten aufweisen.

9. Mikroprojektions-Lichtmodul nach einem der Ansprüche 1 bis 8, **dadurch gekennzeichnet, dass** zumindest eine, vorzugsweise zwei, der optisch wirksamen Blendenkanten der zweiten Blendenvorrichtung (61' bis 65', 71' bis 75', 81 bis 89) einen giebelförmigen Verlauf aufweist.

10. Mikroprojektions-Lichtmodul nach einem der Ansprüche 1 bis 9, **dadurch gekennzeichnet, dass** die erste Blendenvorrichtung (50) und die zweite Blendenvorrichtung (60, 70, 80) identisch ausgebildet sind, wobei vorzugsweise die zweite Blendenvorrichtung (60, 70, 80) hinsichtlich der ersten Blendenvorrichtung (50) bezüglich einer horizontalen Ebene (B-B) gespiegelt angeordnet ist

11. Mikroprojektions-Lichtmodul nach einem der Ansprüche 1 bis 10, **dadurch gekennzeichnet, dass** zwischen der zumindest einen, vorzugsweise halbleiterbasierten, Lichtquelle (2) und der zumindest einen Projektionseinrichtung (3) zumindest eine Vorsatzoptikeinrichtung (4), vorzugsweise ein Kollimator angeordnet ist, in welche zumindest eine Vorsatzoptikeinrichtung (4) die zumindest eine Lichtquelle (2) das von ihr emittierte Licht in einstrahlt, und welche Vorsatzoptikeinrichtung (4) derart ausgebildet ist, dass das aus ihr austretende Licht im Wesentlichen parallel gerichtet ist

12. Beleuchtungsvorrichtung für einen Fahrzeugscheinwerfer, umfassend eine, zwei oder mehr Mikroprojektions-Lichtmodule (1) nach einem der Ansprüche 1 bis 11.

## Claims

1. A microprojection light module (1) for a motor vehicle headlamp, comprising
(*) at least one light source (2); and
*) at least one projection device (3) which images the light emerging from the at least one light source (2) into an area in front of the motor vehicle in the form of at least one light distribution,
wherein
the projection device (3):
-) an entrance optic (30) comprising one, two or more micro entrance optics (31), preferably arranged in an array
-) an exit optic (40) comprising one, two or more micro exit optics (41), preferably arranged in an array, wherein
each micro-entry optic (31) is assigned exactly one micro-exit optic (41),
wherein the micro-entry optics (31) are designed and/or the micro-entry optics (31) and the micro-exit optics (41) are arranged relative to one another in such a way that substantially all the light emerging from a micro-entry optic (31) enters exactly only the associated micro-exit optic (41), and wherein
the light preformed by the micro-entry optics (31) is imaged by the micro-exit optics (41) into an area in front of the motor vehicle as at least one light distribution (LV1 - LV5; GLV), wherein
a micro-entry optic (31) and a micro-exit optic (41) associated with the one micro-entry optic (31) form a micro-optical system, which micro-optical system has at least one micro-optic focal point (F1), wherein preferably optical axes (310, 410) of the mutually associated micro-entry optics (31) and micro-exit optics (41) extend parallel to one another, in particular coincide, wherein
a first diaphragm device (50) is arranged between the entrance optics (30) and the exit optics (40), the first diaphragm device (50) lying in a plane spanned by the micro-optics focal points (F1), wherein the first diaphragm device (50) has a diaphragm (51 to 55) with in each case at least one, for example exactly one optically effective diaphragm edge (51', 52', 53', 54', 55') for at least one pair of micro-entry and micro-exit optics (31, 41) associated with one another, preferably for several pairs and in particular for all pairs,
**characterized in that** at least one second diaphragm device (60, 70, 80) is arranged between the entrance optics (30) and the exit optics (40),
which second diaphragm device (60, 70, 80) has a diaphragm (61 to 65, 71 to 75, 81 to 89) with in each case at least one optically active diaphragm edge (61' to 65', 71' to 75', 81' to 89') for at least one pair of micro-entry and micro-exit optics (31, 41) assigned to one another, wherein the second diaphragm device (60, 70, 80) is arranged with respect to the first diaphragm device (50) in such a way that the diaphragms (61 to 65, 71 to 75, 81 to 89) of the second diaphragm device (60, 70, 80) are arranged vertically, d. i.e. parallel to the vertical direction (V).

2. Microprojection light module according to claim 1, **characterized in that** the second diaphragm device (60, 70, 80) is arranged between the first diaphragm device (50) and the exit optics (40).

3. Microprojection light module according to claim 1 or 2, **characterized in that** each micro-entry optic (31) focuses the light passing through it into the at least one micro-optic focal point (F1).

4. Microprojection light module according to Claims 1 to 3, **characterized in that** a micro-optics focal point (F1) of each micro-entry optics (31) is located in front of the associated micro-exit optics (41) in the light exit direction, wherein the micro-entry optics (31) focus the light passing through them in the vertical direction in each case on the micro-optic focal point (F1) located in front of the micro-exit optics (40), and wherein the micro-exit optics (41) have a focal point in each case coinciding with the micro-optic focal point (F1) of the associated micro-entry optics (31).

5. Microprojection light module according to one of claims 1 to 4, **characterized in that** each micro-optics system expands the light passing through it in the horizontal direction (H).

6. Microprojection light module according to one of claims 1 to 5, **characterized in that** each micro-entry optic (31) is designed as a collection optic, preferably the collection optic collecting light in at least one direction.

7. Microprojection light module according to one of claims 1 to 8, **characterized in that** the mutually facing boundary surfaces (31', 41') of mutually associated micro-entry optics (31) and micro-exit optics (41) are designed congruent to one another, preferably plane, and are preferably also arranged congruent to one another.

8. Microprojection light module according to one of claims 1 to 7, **characterized in that** the second diaphragm device (60, 70, 80) comprises for several pairs and in particular for all pairs of the micro-inlet and micro-outlet optics (31,41) associated with one another a diaphragm (61 to 65, 71 to 75, 81 to 89) with in each case at least one, for example exactly one optically effective aperture edge (61' to 65', 71' to 75', 81' to 89'), preferably all apertures of the second aperture device (60, 70, 80) having identical aperture edges or at least two apertures of the second aperture device (60, 70, 80) having differently shaped aperture edges.

9. Microprojection light module according to one of claims 1 to 8, **characterized in that** at least one, preferably two, of the optically active diaphragm edges of the second diaphragm device (61' to 65', 71' to 75', 81 to 89) has a gable-shaped course.

10. Microprojection light module according to one of claims 1 to 9, **characterized in that** the first diaphragm device (50) and the second diaphragm device (60, 70, 80) are identically designed, preferably the second diaphragm device (60, 70, 80) being arranged mirrored with respect to the first diaphragm device (50) with respect to a horizontal plane (B-B).

11. Microprojection light module according to one of claims 1 to 10, **characterized in that** at least one optical attachment device (4), preferably a collimator, is arranged between the at least one, preferably semiconductor-based, light source (2) and the at least one projection device (3), into which at least one optical attachment device (4) the at least one light source (2) irradiates the light emitted by it, and which optical attachment device (4) is designed in such a way that the light emerging from it is directed essentially parallel.

12. A lighting device for a vehicle headlamp, comprising one, two or more microprojection light modules (1) according to one of claims 1 to 11.

## Revendications

1. Un module de lumière de microprojection (1) pour un projecteur de véhicule automobile, comprenant
(*) au moins une source de lumière (2); et
*) au moins un dispositif de projection (3) qui image la lumière sortant de la au moins une source lumineuse (2) dans une zone située devant le véhicule automobile sous la forme d'au moins une distribution de lumière, dans lequel
l'appareil de projection (3) :
une optique d'entrée (30) comprenant une, deux ou plusieurs micro-optiques d'entrée (31), de préférence disposées en réseau
-) une optique de sortie (40) comprenant une, deux ou plusieurs microoptiques de sortie (41), de préférence disposées en réseau, dans laquelle
chaque optique de micro-entrée (31) se voit attribuer exactement une optique de micro- sortie (41),
dans lequel l'optique de micro-entrée (31) est conçue et/ou l'optique de micro-entrée (31) et l'optique de micro-sortie (41) sont disposées l'une par rapport à l'autre de telle manière que pratiquement toute la lumière sortant d'une optique de micro-entrée (31) entre exactement uniquement dans l'optique de micro-sortie (41) associée, et dans lequel
la lumière préformée par l'optique à micro-entrée (31) est reproduite par l'optique à micro-sortie (41) dans une zone située à l'avant du véhicule automobile sous la forme d'au moins une distribution de lumière (LV1 - LV5 ; GLV), dans laquelle
une optique de micro-entrée (31) et une optique de micro-sortie (41) associées à la première optique de micro-entrée (31) forment un système micro-optique, lequel système micro-optique présente au moins un foyer micro-optique (F1), dans lequel de préférence les axes optiques (310, 410) de l'optique de micro-entrée (31) et de l'optique de micro-sortie (41) associées l'une à l'autre s'étendent parallèlement l'une à l'autre, en particulier coïncident, dans lequel un premier dispositif à diaphragme (50) est disposé entre l'optique d'entrée (30) et l'optique de sortie (40), le premier dispositif à diaphragme (50) se trouvant dans un plan délimité par les points focaux de la micro-optique (F1), dans lequel le premier dispositif à diaphragme (50) présente un diaphragme (51 à 55) avec dans chaque cas au moins un, par exemple exactement un bord de diaphragme optiquement efficace (51', 52', 53', 54', 55') pour au moins une paire d'optiques de micro-entrée et de micro- sortie (31, 41) associées l'une à l'autre, de préférence pour plusieurs paires et en particulier pour toutes les paires,
**caractérisé en ce qu'**au moins un deuxième dispositif à diaphragme (60, 70, 80) est disposé entre l'optique d'entrée (30) et l'optique de sortie (40),
lequel deuxième dispositif à diaphragme (60, 70, 80) comporte un diaphragme (61 à 65, 71 à 75, 81 à 89) avec dans chaque cas au moins un bord de diaphragme optiquement actif (61' à 65', 71' à 75', 81' à 89') pour au moins une paire d'optiques de micro-entrée et de micro- sortie (31, 41) attribuées l'une à l'autre, dans lequel le deuxième dispositif à membrane (60, 70, 80) est disposé par rapport au premier dispositif à membrane (50) de telle sorte que les membranes (61 à 65, 71 à 75, 81 à 89) du deuxième dispositif à membrane (60, 70, 80) sont disposées verticalement, d. c'est-à-dire parallèlement à la direction verticale (V).

2. Module de lumière de microprojection selon la revendication 1, **caractérisé en ce que** le deuxième dispositif à diaphragme (60, 70, 80) est disposé entre le premier dispositif à diaphragme (50) et l'optique de sortie (40).

3. Module de lumière de microprojection selon la revendication 1 ou 2, **caractérisé en ce que** chaque optique de microentrée (31) focalise la lumière qui la traverse dans le au moins un point focal micro-optique (F1).

4. Module de lumière de microprojection selon les revendications 1 à 3, **caractérisé en ce qu'**un point focal de micro-optique (F1) de chaque optique de microentrée (31) est situé devant l'optique de micro-sortie associée (41) dans la direction de sortie de la lumière, dans lequel les optiques à micro-entrée (31) focalisent la lumière qui les traverse dans la direction verticale à chaque fois sur le point focal micro-optique (F1) situé devant l'optique à micro-entrée (40), et dans lequel les optiques à micro-entrée (41) ont à chaque fois un point focal qui coïncide avec le point focal micro-optique (F1) de l'optique à micro-entrée (31) associée.

5. Module de lumière de microprojection selon l'une des revendications 1 à 4, **caractérisé en ce que** chaque système micro-optique dilate la lumière qui le traverse dans la direction horizontale (H).

6. Module de lumière de microprojection selon l'une des revendications 1 à 5, **caractérisé en ce que** chaque optique de microprojection (31) est conçue comme une optique de collecte, de préférence l'optique de collecte collectant la lumière dans au moins une direction.

7. Module de lumière de microprojection selon l'une des revendications 1 à 8, **caractérisé en ce que** les surfaces limites (31', 41'), tournées l'une vers l'autre, d'optiques de microentrée (31) et de micro-sortie (41) mutuellement associées sont conçues de manière congruente l'une par rapport à l'autre, de préférence planes, et sont de préférence également disposées de manière congruente l'une par rapport à l'autre.

8. Module de lumière de microprojection selon l'une des revendications 1 à 7, **caractérisé en ce que** le deuxième dispositif à diaphragme (60, 70, 80) comprend pour plusieurs paires et en particulier pour toutes les paires de l'optique de micro-injection et de micro-sortie (31, 41) associées l'une à l'autre un diaphragme (61 à 65, 71 à 75, 81 à 89) avec dans chaque cas au moins un, par exemple exactement un bord d'ouverture optiquement efficace (61' à 65', 71' à 75', 81' à 89'), de préférence toutes les ouvertures du deuxième dispositif d'ouverture (60, 70, 80) ayant des bords d'ouverture identiques ou au moins deux ouvertures du deuxième dispositif d'ouverture (60, 70, 80) ayant des bords d'ouverture de forme différente.

9. Module de lumière de microprojection selon l'une des revendications 1 à 8, **caractérisé en ce qu'**au moins un, de préférence deux, des bords de diaphragme optiquement actifs du deuxième dispositif de diaphragme (61' à 65', 71' à 75', 81 à 89) présente un tracé en forme de pignon.

10. Module de lumière de microprojection selon l'une des revendications 1 à 9, **caractérisé en ce que** le premier dispositif à diaphragme (50) et le deuxième dispositif à diaphragme (60, 70, 80) sont de conception identique, de préférence le deuxième dispositif à diaphragme (60, 70, 80) étant disposé de manière réfléchie par rapport au premier dispositif à diaphragme (50) par rapport à un plan horizontal (B-B).

11. Module de lumière de microprojection selon l'une des revendications 1 à 10, **caractérisé en ce qu'**au moins un dispositif de fixation optique (4), de préférence un collimateur, est disposé entre la au moins une source lumineuse (2), de préférence à base de semi-conducteurs, et le au moins un dispositif de projection (3), dans lequel au moins un dispositif de fixation optique (4) la au moins une source lumineuse (2) rayonne la lumière émise par celle-ci, et lequel dispositif de fixation optique (4) est conçu de telle manière que la lumière sortant de celui-ci est dirigée essentiellement parallèlement.

12. Dispositif d'éclairage pour un phare de véhicule, comprenant un, deux ou plusieurs modules de lumière de microprojection (1) selon l'une des revendications 1 à 11.
